# EUROPEAN PATENT SPECIFICATION

(11) **EP 4 484 916 B1**
(45) Date of publication and mention of the grant of the patent: **02.12.2026**
(21) Application number: 23777617.4
(22) Date of filing: 30.01.2023
(51) Int. Cl.: G01B 11/275, B25B 5/14, G01M 17/013

(54) **CLAMPING DEVICE AND METHOD FOR DETERMINING CURVE OF STROKE CURVE PROTRUSION IN CLAMPING DEVICE**
SPANNVORRICHTUNG UND VERFAHREN ZUR BESTIMMUNG DER KURVE DES HUBKURVENVORSPRUNGES EINER SPANNVORRICHTUNG
DISPOSITIF DE SERRAGE ET PROCÉDÉ DE DÉTERMINATION DE COURBE DE SAILLIE DE COURBE DE COURSE DANS UN DISPOSITIF DE SERRAGE

(30) Priority: 28.03.2022 CN 202210313612
(43) Date of publication of application: 01.01.2025
(73) Proprietor: Autel Intelligent Technology Corp. Ltd., Shenzhen City 518000 (CN)
(72) Inventor: ZHAO, Mingyue, Shenzhen, Guangdong 518055 (CN); ZHANG, Dengguo, Shenzhen, Guangdong 518055 (CN)
(74) Representative: Harris, Oliver John Richard
(86) International application number: PCT/CN2023/073811
(87) International publication number: WO 2023/185238

(56) References cited:
- CN-A- 112 045 602
- CN-A- 114 147 655
- CN-A- 114 577 494
- CN-U- 212 685 107
- DE-A1- 10 354 511
- DE-A1- 4 111 545
- GB-A- 554 066
- US-B2- 9 228 819

## Description

### TECHNICAL FIELD

The present application relates to the technical field of vehicle device, and in particular to a clamping device and a method for determining a curve of a stroke curve protrusion in a clamping device.

### BACKGROUND

With the development of automobile industry and the improvement of people's living standards, more and more families have domestic cars. It is necessary to detect the steering of the wheels after the automobiles are produced, and after a period of use, there might be deviations for the steering of the automobiles, for either situation of which, four-wheel alignment is involved. Through the calibration plate and calibration equipment, the four-wheel parameters of the vehicle are collected and adjusted to ensure that the vehicle maintains good driving performance and improve the reliability of the vehicle.

CN 212685107 U discloses a clamping device comprising two clamping assemblies, a rotating module comprising a rotating plate and two connecting rods, wherein the rotating plate is provided with a toothed contour section in order to cooperate with a ratchet assembly, which is driven by a first drive module in order to rotate the rotating module and retract the clamping assemblies.

In carrying out the examples of the present application, the inventors found that: at present, a tire clamp used in the four-wheel positioning process, due to the use of connecting rod rotation transmission, the length of each extension of clamping arm is inconsistent, resulting in different forces to hold the tire at different positions, affecting the positioning work.

### SUMMARY

The technical problem to be mainly solved by the embodiments of the present application is to provide a clamping device and a method for determining a curve of a stroke curve protrusion in the clamping device, so that when a clamping module clamps a tire at any position, the retraction length of the clamping assembly is consistent, thereby making the force with which the clamping device grips an object to be clamped the same.

In order to solve the above technical problem, one technical solution adopted by the embodiments of the present application is to provide a clamping device including a mounting base, a clamping module, a rotating module, a first drive module and an engagement module, a clamping module including at least two clamping assemblies, where the at least two clamping assemblies are both provided on the mounting base, and the at least two clamping assemblies are movable with respect to the mounting base; the rotating module includes a rotating plate and at least two connecting rods, the rotating plate is rotatably provided on the mounting base, first ends of the at least two connecting rods are both rotatably connected to one of the rotating plate, a second end of the connecting rod is rotatably connected to one of the clamping assemblies, and the rotating plate is provided with a stroke curve protrusion; a first drive module is provided on the mounting base; the engagement module includes a ratchet wheel and a ratchet assembly, where the ratchet wheel is fixed to the rotating plate, the ratchet assembly can rotate relative to the rotating plate, the first drive module is connected to the ratchet assembly, and when the first drive module is driven, the first drive module drives the ratchet assembly to move relative to the rotating module, where when the first drive module is located at a first position, the ratchet wheel and the ratchet assembly are separated, when the first drive module is located at a second position, the ratchet wheel and the ratchet assembly are engaged, and when the first drive module is located at an end position, the first drive module is locked, and when the first drive module moves from a second position to an end position, the ratchet assembly drives the ratchet wheel to rotate, thereby driving the rotating module to rotate; when the rotating plate rotates, the stroke curve protrusion being used for adjusting the distance between the ratchet wheel and the ratchet assembly, so that when the clamping module is at different positions, the second position is different, so that when the first drive module moves from the second position to the end position, the rotating plate rotates at different angles, and the moving distance of the clamping module at different positions relative to the mounting base remains the same.

Alternatively, the ratchet assembly includes a rotating portion, a detent, a first elastic member, a first connector, a ratchet stop and a limiting member, the rotating portion is provided coaxially with the rotating module, and the rotating portion can rotate relative to the rotating module, a first end of the detent is connected to the rotating portion, a first end of the first elastic member is connected to the mounting base, a second end of the first elastic member is connected to the first end of the detent, the second end of the detent is provided with a ratchet, and the first end of the first connector is rotatably connected to the rotating portion; the second end of the first connector is rotatably connected to the first end of the ratchet stop, the first end of the ratchet stop is provided with a first protrusion, the first protrusion abuts against the second end of the detent, the first end of the ratchet stop abuts against the stroke curve protrusion, the limiting member is fixed to the mounting base, and the second end of the ratchet stop abuts against the limiting member; when the first drive module drives the rotating portion to rotate, the rotating portion rotates with respect to the ratchet wheel, under the action of the first elastic member, the ratchet of the second end of the detent approaches the ratchet wheel, the ratchet stop always abuts against the stroke curve protrusion under the action of the first connector and the limiting member, the ratchet stop rotates with respect to the first connector, the first protrusion of the first end of the ratchet stop approaches the ratchet wheel, until the ratchet engages the ratchet wheel when the first drive module is at the second position, the first drive module continues to drive the rotating portion to move, and the detent moves the ratchet wheel so that the rotating plate moves the clamping assembly via the connecting rod.

Alternatively, the first drive module includes a handle, a second connector, a third connector and a fourth connector; a first end of the handle is rotatably provided on the mounting base, a second protrusion extends from the first end of the handle, a first end of the second connector is rotatably connected to the second protrusion, a first end of the third connector is rotatably connected to the mounting base, a second end of the third connector, a second end of the second connector and a first end of the fourth connector are rotatably connected, and a second end of the fourth connector is rotatably connected to the rotating portion; when the handle rotates from a start position to an end position and drives the second connector, the third connector and the fourth connector to move via the second protrusion to push the rotating portion to rotate; when the third connector and the fourth connector are in the same straight line, the first drive module is in a self-locked state to lock the rotating portion; and when the handle rotates from the end position to the start position, the handle drives the second connector, the third connector and the fourth connector to move via the second protrusion, the third connector and the fourth connector are not in the same straight line, the first drive module is in an unlocked state, and the rotating portion is movable relative to the mounting base.

Alternatively, the fourth connector includes a compression outer cylinder, a compression rod and a second elastic member, a first end of the compression rod is rotatably connected to a second end of the third connector and a second end of the second connector, a second end of the compression rod is sleeved with the compression outer cylinder, the compression outer cylinder is rotatably connected to the rotating portion, the second elastic member is provided inside the compression outer cylinder, two ends of the second elastic member respectively abut against the compression rod and the compression outer cylinder, the compression rod is telescopically movable inside the compression outer cylinder, and the second elastic member serves to cushion the movement between the compression rod and the compression outer cylinder.

Alternatively, the clamping assembly includes a jaw, a sliding sleeve, a sleeve rod and a first locking module; the sliding sleeve is provided on the mounting base, the sliding sleeve is movable relative to the mounting base, a first end of the sliding sleeve of one of the clamping assemblies is rotatably connected to a second end of one of the connecting rods, the sliding sleeve is provided with a telescopic groove, and the telescopic groove extends from the second end of the sliding sleeve to the first end of the sliding sleeve; the jaw is fixed to a first end of the sleeve rod, a second end of the sleeve rod is inserted into a telescopic groove of the sliding sleeve from a second end of the sliding sleeve, and the sleeve rod is movable along the telescopic groove so that the first end of the sleeve rod moves in a direction away from the sliding sleeve or moves in a direction close to the sliding sleeve; the first locking module is provided on the sliding sleeve and the sleeve rod, and when the first locking module is in a locked state, the sliding sleeve and the sleeve rod are fixed, and when the first locking module is in an unlocked state, the sleeve rod is allowed to slide relative to the sliding sleeve.

Alternatively, the first locking module includes a locking base, a third elastic member, a fourth elastic member, a thimble and a button; the sliding sleeve is provided with a first through-hole in communication with the telescopic groove, the locking base is fixed to the sliding sleeve and provided with a second through-hole, the second through-hole is in communication with the first through-hole, the button includes a pressing portion and an extending portion extending from the pressing portion, the extending portion is inserted into the second through-hole, and the extending portion is movable along the second through-hole and is inserted into the first through-hole from the second through-hole or retracted into the second through-hole from the first through-hole, and the third elastic member is located in the second through-hole; a first end of the third elastic member abuts against the pressing portion, and a second end of the third elastic member abuts against the sliding sleeve; the sleeve rod is provided with a mounting groove, the fourth elastic member and the thimble are provided in the mounting groove, a first end of the fourth elastic member is fixed to a groove bottom of the mounting groove, and a second end of the fourth elastic member is fixed to a first end of the thimble; when the sleeve rod slides to a position where the first through-hole corresponds to the mounting groove, under the action of the fourth elastic member, the second end of the thimble protrudes from the notch of the mounting groove and is inserted into the first through-hole, and the first locking module is in a locked state; and when the pressing portion is forced towards the sleeve rod, the extending portion is inserted into the first through-hole from the second through-hole, and the second end of the thimble is pushed out of the first through-hole, the first locking module is in an unlocked state.

Alternatively, a side wall of the pressing portion extends with a first barrier; the locking base is provided with a second barrier located at an end of the second through-hole away from the first through-hole, and the second barrier is used for blocking the first barrier.

Alternatively, the third elastic member is a spring and is sleeved over the extending portion, and/or the second end of the thimble is provided with a transition.

Alternatively, the clamping device further includes at least two runner modules, each of the at least two runner modules being fixed to the mounting base, a sliding sleeve of one of the clamping assemblies being slidably provided on one of the runner modules.

Alternatively, the runner module includes a first mounting frame, a second mounting frame, a first runner, a second runner, a third runner and a fourth runner, where the first mounting frame and the second mounting frame are relatively fixed to the mounting base, the first runner and the second runner are rotatably provided on the first mounting frame, the first runner and the second runner both abut against a first side surface of the sliding sleeve, the first runner and the second runner are provided perpendicular to each other, and the third runner and the fourth runner are rotatably provided on the second mounting frame; the third runner and the fourth runner each abut against a second side surface of the sliding sleeve, and the third runner and the fourth runner are provided perpendicular to each other.

Alternatively, the first side surface of the sliding sleeve is provided with a first sliding groove, the first runner abuts against a groove bottom of the first sliding groove, and the second runner abuts against a groove wall of the first sliding groove; a second side surface of the sliding sleeve is provided with a second sliding groove, the third runner abuts against a groove bottom of the second sliding groove, and the fourth runner abuts against a groove wall of the second sliding groove.

Alternatively, the clamping device further includes a limiting module, where the limiting module is provided on the mounting base, the limiting module includes a first limiting protrusion, a second limiting protrusion, a limiting elastic member and a limiting fixing member, the first limiting protrusion and the second limiting protrusion are both provided on the mounting base, the limiting fixing member fixes the limiting elastic member to the mounting base afterward, a first end of the limiting elastic member abuts against the first limiting protrusion, and a second end of the limiting elastic member abuts against the second limiting protrusion.

Alternatively, the clamping device further includes a second drive module, the second drive module includes a third mounting frame, a support shaft and a coil spring, the third mounting frame is provided in the mounting base, the support shaft is connected to the third mounting frame through the coil spring, and the coil spring is connected to one of the clamping assemblies.

In order to solve the above technical problem, another technical solution adopted by the embodiments of the present application is to provide a method for determining a curve of a stroke curve protrusion in a clamping device, the method including: determining a first distance required by the clamping module when the first drive module moves from a second position to an end position; acquiring a length of the connecting rod; acquiring a second distance between a first end of the connecting rod and a rotation center point of the rotating plate and a first included angle between a first connecting line and a second connecting line when the clamping module is at each sampling position, where the first connecting line is a connecting line between the second end of the connecting rod and the rotation center point of the rotating plate, and the second line is a connecting line between the first end of the connecting rod and the rotation center point of the rotating plate; calculating a rotation angle required by the rotating plate when the clamping module is at each sampling position according to the first distance, the length of the connecting rod, the second distance and the first included angle; and determining the curve of the stroke curve protrusion according to the rotation angle required to rotate the plate when the clamping module is in each sampling position.

Alternatively, the step of determining the curve of the stroke curve protrusion according to the rotation angle required to rotate the plate when the clamping module is in each sampling position further includes: mapping each of the sampling positions onto the rotating plate; calculating a required distance between the ratchet wheel and the ratchet assembly according to a rotation angle required to rotate the plate when the clamping module is in each sampling position; and determining the stroke curve protrusion according to the required distance between the ratchet wheel and ratchet assembly when the clamping module is in each sampling position.

In order to solve the above technical problem, still another technical solution adopted by the embodiments of the present application is to provide a device for determining a curve of a stroke curve protrusion of a clamping device, the device including: a first determination module configured to determine a first distance required by the clamping module when the first drive module moves from a second position to an end position; a first acquisition module configured to acquire a length of the connecting rod; a second acquisition module configured to acquire a second distance between a first end of the connecting rod and a rotation center point of the rotating plate and a first included angle between a first connecting line and a second connecting line when the clamping module is at each sampling position, where the first connecting line is a connecting line between the second end of the connecting rod and the rotation center point of the rotating plate, and the second line is a connecting line between the first end of the connecting rod and the rotation center point of the rotating plate; a calculation module configured to calculate a rotation angle required by the rotating plate when the clamping module is at each sampling position according to the first distance, the length of the connecting rod, the second distance and the first included angle; and a second determination module configured to determine the curve of the stroke curve protrusion according to the rotation angle required to rotate the plate when the clamping module is in each sampling position.

In order to solve the above technical problem, another technical solution adopted by the embodiments of the present application is to provide a detection apparatus including: a controller including: at least one processor, and a memory communicatively coupled to the at least one processor; where the memory stores instructions executable by the at least one processor, the instructions being executed by the at least one processor to enable the at least one processor to perform the method as described above.

In order to solve the above technical problem, another technical solution adopted by the embodiments of the present application is to provide a non-transitory computer-readable storage medium storing computer-executable instructions for causing a server to perform the method as described above.

Advantageous effects of the embodiments of the present application are: in the embodiment of the present application, the technical solution that the clamping device uses a rotating module including a rotating plate and a connecting rod, where the connecting rod is rotatably connected to a clamping module and the rotating plate, respectively, and the rotating plate is provided with a stroke curve protrusion; and an engagement module including a ratchet wheel and a ratchet assembly, where the ratchet assembly always abuts against the stroke curve protrusion so as to adjust the engagement position of the ratchet assembly and the ratchet wheel. According to the described technical solution, the technical problem of a clamping device that when a first driving module rotates at the same angle, the retraction distance of the clamping module relative to a mounting base is inconsistent is solved, and the technical effect that when the clamping module is at different positions, in a process where the first driving module rotates to an end position after the ratchet assembly and the ratchet wheel are engaged, the retraction distance of the clamping module relative to the mounting base remains the same is achieved.

### BRIEF DESCRIPTION OF THE DRAWINGS

In order that the detailed description of the present application or the prior art may be more clearly understood, a brief description of the drawings that accompany the detailed description of the application or the prior art is set forth below. Throughout the drawings, like elements or portions are generally identified by like reference numerals. In the drawings, elements or portions may not necessarily be drawn to scale.
FIG. 1 is an exploded view from a perspective of a clamping device according to an embodiment of the present application;
FIG. 2 is an exploded view from a perspective of a mounting base in a clamping device according to an embodiment of the present application;
FIG. 3 is an exploded view from a perspective of a rotating module in a clamping device according to an embodiment of the present application;
FIG. 4 is an exploded view from a perspective of an engagement module in a clamping device according to an embodiment of the present application;
FIG. 5 is a schematic view from a perspective of a first drive module in a clamping device according to an embodiment of the present application;
FIG. 6 is a schematic view from another perspective of a first drive module in a clamping device according to an embodiment of the present application;
FIG. 7 is an exploded view from a perspective of a fourth connector in a clamping device according to an embodiment of the present application;
FIG. 8 is an exploded view from a perspective of a clamping module in a clamping device according to an embodiment of the present application;
FIG. 9 is a schematic view from a perspective of a sliding sleeve and a sleeve rod in a clamping device according to an embodiment of the present application;
FIG. 10 is a cross-sectional view from a perspective of the first locking assembly of the clamping device according to an embodiment of the present application;
FIG. 11 is an exploded view from a perspective of a runner module in a clamping device according to an embodiment of the present application;
FIG. 12 is an enlarged view from a perspective of a limiting module in a clamping device according to an embodiment of the present application;
FIG. 13 is an exploded view from a perspective of a second drive module in a clamping device according to an embodiment of the present application;
FIG. 14 is a schematic diagram of an application environment of a method for determining a curve of a stroke curve protrusion of a clamping device according to another embodiment of the present application;
FIG. 15 is a flow chart of a method for determining a curve of a stroke curve protrusion of a clamping device according to another embodiment of the present application;
FIG. 16 is a flowchart of step S105 in the method for determining the curve of the stroke curve protrusion of the clamping device according to another embodiment of the present application;
FIG. 17 is a structural block diagram of a device for determining a curve on which a stroke curve protrusion of a clamping device is located according to another embodiment of the present application; and
FIG. 18 is a schematic diagram of a computing apparatus according to yet another embodiment of the present application.

### DETAILED DESCRIPTION OF THE INVENTION

To facilitate an understanding of the present application, a more particular description of the application will be rendered by reference to specific embodiments thereof which are illustrated in the appended drawings. It will be understood that when an element is referred to as being "fixed to" to another element, it can be directly on the other element or intervening elements may be present. When an element is referred to as being "connected" to another element, it can be directly connected to the other element or intervening elements may be present. As used in the description, the terms "upper", "lower", "inner", "outer", "vertical", "horizontal", and the like indicate orientations or positional relationships based on the orientation or positional relationships shown in the drawings, are merely for convenience in describing and simplifying the present application, and do not indicate or imply that the referenced devices or elements must have a particular orientation, be constructed and operated in a particular orientation, and thus are not to be construed as limiting the present application. Further, the terms "first", "second", etc. are used for descriptive purposes only and are not to be construed as indicating or implying relative importance.

Unless defined otherwise, all technical and scientific terms used in the specification have the same meaning as commonly understood by a person skilled in the technical field to which this application belongs. The terminology used in the description of the present application is used for the purpose of describing particular embodiments only and is not intended to be limiting of the application. As used herein, the term "and/or" includes any and all combinations of one or more of the associated listed items.

Further, the technical features involved in the different embodiments of the present application described below can be combined with each other as long as they do not conflict with each other.

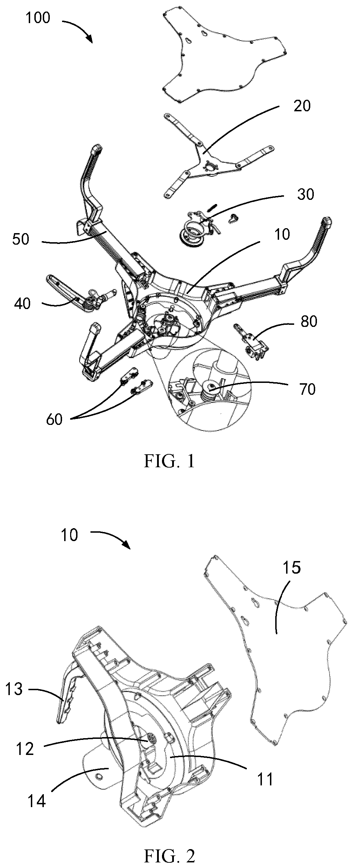

Referring to FIG. 1, the clamping device 100 includes a mounting base 10, a rotating module 20, an engagement module 30, a first drive module 40, a clamping module 50, a runner module 60, a second drive module 80, and a limiting module 70. The rotating module 20, the engagement module 30, the first drive module 40, the clamping module 50, the runner module 60, the second drive module 80 and the limiting module 70 are all provided on the mounting base 10. The first drive module 40 is connected to the rotating module 20, and the rotating module 20 is connected to the clamping module 50, the second drive module 80 is connected to the clamping module 50 and used for driving the clamping module 50 to move away from each other relative to the mounting base 10 so that the clamping device 100 is in a state to be clamped, the first drive module 40 is used for driving the engagement module 30 to rotate, and when the first drive module 40 is in a second position and the engagement module 30 is in an engagement state, the rotating module 20 can rotate synchronously with the engagement module 30; the rotating module 20 moves the clamping module 50 towards each other with respect to the mounting base 10, so that the clamping device 100 clamps an object to be clamped. The runner module 60 is connected to the clamping module 50, and the runner module 60 is used for supporting the clamping module 50 and guiding the movement of the clamping module 50. The limiting module 70 serves to limit the rotation angle range of the rotating module 20 to prevent a rotation dead zone of the rotating module 20.

Referring to FIG. 2, the mounting base 10 is provided with an accommodating space 11, a rotating shaft 12, a grip 13, a mounting portion 14, and a cover plate 15. The accommodating space 11 is used for accommodating the rotating module 20, the engagement module 30, the first drive module 40, the clamping module 50, the runner module 60, the second drive module 80 and the limiting module 70, where a rotating shaft 12 is provided at the center of the accommodating space 11, the rotating shaft 12 is used for passing the rotating module 20 and the engagement module 30 therethrough, both the rotating module 20 and the engagement module 30 can rotate around the rotating shaft 12, and when the engagement module 30 is in an engaged state, the engagement module 30 rotates synchronously with the rotating module, and when the engagement module 30 is in a non-engaged state, the engagement module 30 can rotate relative to the rotating module 20. A grip 13 is provided on a surface of the mounting base 10 facing away from the accommodating space 11 and is adapted to be gripped by a user to facilitate use and handling of the clamping device 100. A mounting portion 14 is provided on a surface of the mounting base 10 facing away from the accommodating space 11 and is used for mounting a calibration assembly. In some embodiments, the calibration assembly includes a calibration plate. The cover plate 15 is used for covering the accommodating space 11 and preventing the rotating module 20, the engagement module 30, the first drive module 40, the clamping module 50, the runner module 60, the second drive module 80 and the limiting module 70 in the accommodating space 11 from being exposed, to enhance the aesthetic appearance of the mounting base 10, and at the same time, the cover plate 15 is used for preventing impurities from entering the accommodating space 11 and interfering with the normal operation of the clamping device 100.

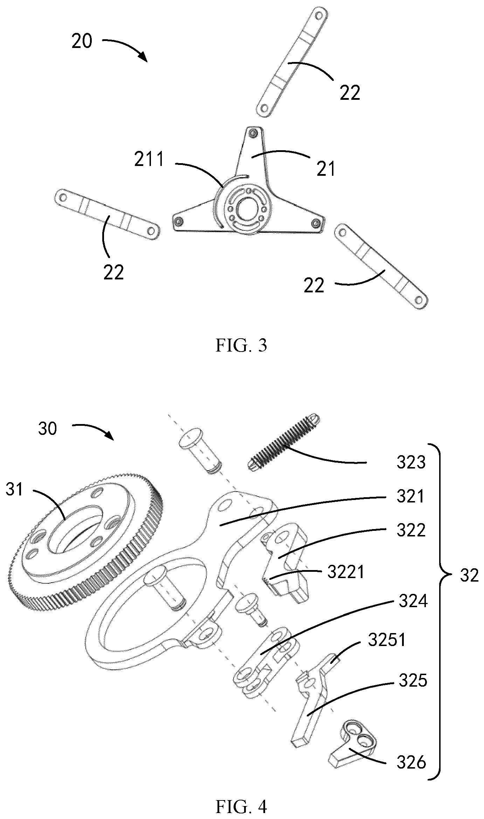

Regarding the above-mentioned rotating module 20, referring to FIG. 3, the rotating module 20 includes a rotating plate 21 and at least two connecting rods 22, where a first end of the connecting rod 22 is rotatably connected to the rotating plate 21, and a second end of the connecting rod 22 is rotatably connected to the clamping module 50. The rotating plate 21 is provided with a stroke curve protrusion 211 for cooperating with the engagement module 30 to control the state of the engagement module 30.

With respect to the engagement module 30 described above, referring to FIG. 4, the engagement module 30 includes a ratchet wheel 31 and a ratchet assembly 32. The ratchet wheel 31 is rotatably provided to the rotating shaft 12 and fixedly connected to the rotating plate 21, and the ratchet assembly 32 includes a rotating portion 321, a detent 322, a first elastic member 323, a first connector 324, a ratchet stop 325, and a limiting member 326. The rotating portion 321 is rotatably provided to the rotating shaft 12, and is rotatable relative to the rotating plate 21 and the ratchet wheel 31. A first end of the detent 322 is rotatably provided on the rotating portion 321, a second end of the detent 322 is provided with a ratchet 3221 for engaging with the ratchet wheel 31, a first end of the first connector 324 is rotatably connected to the rotating portion 321, a second end of the first connector 324 is rotatably connected to a first end of the ratchet stop 325, the first end of the ratchet stop 325 is provided with a first protrusion 3251, the first protrusion 3251 abuts against the second end of the detent 322, the first end of the ratchet stop 325 always abuts against the stroke curve protrusion 211, the limiting member 326 is fixed on the mounting base 10, and the second end of the ratchet stop 325 always abuts against the limiting member 326. One end of a first elastic member 323 is provided to the mounting base 10, and the other end of the first elastic member 323 is connected to the first end of the detent 322, and the first elastic member 323 is used to move the second end of the detent 322 in a direction close to the ratchet wheel 31.

In some embodiments, the junction of the first connector 324 with the rotating portion 321 and the junction of the first connector 324 with the ratchet stop 325 are each provided with a spring such that when the rotating portion 321 rotates, a first end of the ratchet stop 325 always abuts against the stroke curve protrusion 211 and a second end of the ratchet stop 325 always abuts against the limiting member 326.

In some embodiments, the engagement module 30 includes a friction ratchet wheel 31 provided to the rotating shaft 12, the friction ratchet wheel 31 being fixedly connected to the rotating plate 21, and an eccentric sector wedge rotatably provided to the rotating portion 321, the eccentric sector wedge being for engagement with the friction ratchet wheel 31.

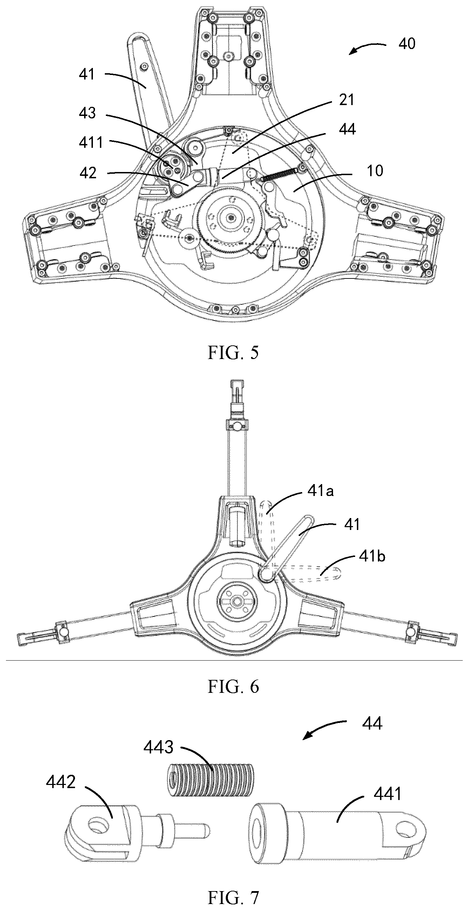

With respect to the first drive module 40 described above, referring to FIG. 5, the first drive module 40 includes a handle 41, a second connector 42, a third connector 43, and a fourth connector 44. A first end of the handle 41 is provided with a second protrusion 411, the second protrusion 411 is rotatably provided on the mounting base 10, the handle 41 is located on a side of the mounting base 10 facing away from the accommodating space 11, a second connector 42, a third connector 43 and a fourth connector 44 are all provided in the accommodating space 11, a first end of the second connector 42 is rotatably connected to the second protrusion 411 of the handle 41, a first end of the third connector 43 is rotatably connected to the mounting base 10, a second end of the second connector 42 and a second end of the third connector 43 are rotatably connected to a first end of the fourth connector 44, and a second end of the fourth connector 44 is rotatably connected to the rotating portion 321.

Referring to FIG. 6, the handle 41 is provided with a start position 41a and an end position 41b, and defines a first direction when the handle 41 is rotated from the start position 41a to the end position 41b, and a second direction when the handle 41 is rotated from the end position 41b to the start position 41a. The handle 41 is further provided with a first position (not shown) and a second position (not shown), where the first position is a position where the handle 41 is located when the ratchet 3221 and the ratchet wheel 31 change from an engaged state to a disengaged state; the second position is the position where the handle 41 is located when the ratchet 3221 and ratchet wheel 31 transit from the disengaged state to the engaged state, the second position being different when the clamping module 50 is in a different position relative to the mounting base 10.

Specifically, referring to FIGS. 4 to 6 together, when an external force is applied to the handle 41 so that the handle 41 rotates in a first direction, the second protrusion 411 pushes the second connector 42 to move, the third connector 43 rotates in the first direction with respect to the mounting base 10, the fourth connector 44 pushes the rotating portion 321 to rotate in a second direction, and the rotating portion 321 drives the detent 322, the first connector 324 and the ratchet stop 325 to rotate with respect to the ratchet wheel 31 and the rotating plate 21, under the action of the first elastic member 323. The second end of the detent 322 moves in a direction close to the ratchet wheel 31; under the action of the first connector 324, the first end of the ratchet stop 325 slides along the stroke curve protrusion 211 and always abuts against the stroke curve protrusion 211; the ratchet stop 325 rotates relative to the first connector 324 in a first direction; in this process, the engagement module 30 is in a non-engagement state, i.e., the ratchet assembly 32, the ratchet wheel 31 and the rotating plate 21 can rotate relative to each other until the handle 41 moves to the second position; the ratchet 3221 at the second end of the detent 322 is engaged with the ratchet wheel 31; at this moment, the engagement module 30 is in an engaged state, i.e., the ratchet assembly 32 and the ratchet wheel 31 and the rotating plate 21 can rotate synchronously; the handle 41 continues to move in the first direction (the handle 41 moves from the second position to the direction of the end position 41b); the detent 322 drives the ratchet wheel 31 and the rotating plate 21 to rotate; the rotating plate 21 drives the clamping module 50 to move relative to the mounting base 10 in the direction of the accommodating space 11; and when the third connector 43 and the fourth connector 44 are in the same straight line, with the handle 41 in the end position 41b, the third connector 43 and the fourth connector 44 are in a self-locked state, the rotating portion 321 is locked to the mounting base 10.

When an external force is applied to the handle 41 so that the handle 41 rotates in a second direction, the second protrusion 411 pulls the second connector 42 to move; the second connector 42 pulls the third connector 43 and the fourth connector 44 to move so that the third connector 43 and the fourth connector 44 are not in the same straight line; the third connector 43 and the fourth connector 44 are in an unlocked state; the fourth connector 44 pulls the rotating portion 321 to rotate in the first direction; the second protrusion 411 of the first end of the ratchet stop 325 lifts the second end of the detent 322 in a direction away from the ratchet wheel 31; when the handle 41 is in the first position, the ratchets 3221 are separated from the ratchet wheel 31, and at this time, the engagement module 30 is in an unengaged state, and the ratchet assembly 32 can rotate relative to the ratchet wheel 31 and the rotating plate 21 to apply an external force to the clamping module 50, so that the clamping module 50 moves away relative to the mounting base 10, and the clamping device 100 releases an object to be clamped.

Regarding the above-mentioned fourth connector 44, referring to FIG. 7, the fourth connector 44 includes a compression outer cylinder 441, a compression rod 442 and a second elastic member 443, where a first end of the compression rod 442 is rotatably connected to a second end of the second connector 42 and a second end of the third connector 43, a second end of the compression rod 442 is sleeved with the compression outer cylinder 441, the compression outer cylinder 441 is rotatably connected to the rotating portion 321, the second elastic member 443 is provided inside the compression outer cylinder 441, and two ends of the second elastic member 443 respectively abut against the compression rod 442 and the compression outer cylinder 441, the compression rod 442 is telescopically movable within the compression outer cylinder 441, and the second elastic member 443 serves to cushion the movement between the compression rod 442 and the compression outer cylinder 441.

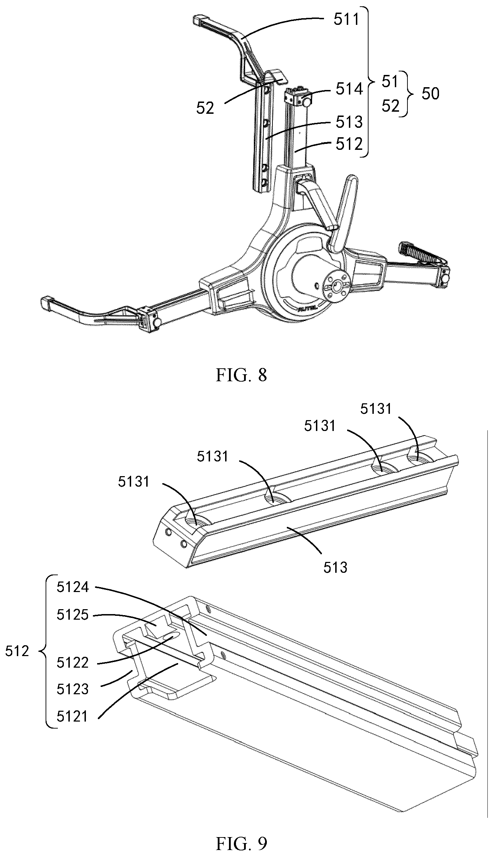

Regarding the above-mentioned clamping module 50, referring to FIG. 8, the clamping module 50 includes a pull hook 52 and at least two clamping assemblies 51, where a first end of the clamping assembly 51 is rotatably connected to a second end of the connecting rod 22, and the second end of the clamping assembly 51 extends from the accommodating space 11; the at least two clamping assemblies 51 can slide relative to the mounting base 10; when the clamping assemblies 51 slide towards each other, the clamping device 100 is in a clamping state, and the clamping assemblies 51 can clamp an object to be clamped; and when the clamping assemblies 51 slide away from each other, the clamping device 100 is in a state to be clamped, and the clamping assemblies 51 release an object to be clamped. A pull hook 52 is provided at the second end of the clamping assembly 51, and the pull hook 52 is used for a user to drive the clamping assembly 51 to move apart so that the clamping device 100 is in a state to be clamped.

In some embodiments, the number of clamping assemblies 51 is three, the three clamping assemblies 51 are uniformly provided on the mounting base 10, the three clamping assemblies 51 are all rotatably connected to the rotating module 20, and the three clamping assemblies 51 is movable synchronously to make the clamping effect of the clamping device 100 better.

The clamping assembly 51 includes a jaw 511, a sliding sleeve 512, a sleeve rod 513, and a first locking assembly 514. A first end of the sliding sleeve 512 is rotatably connected to a second end of the connecting rod 22, the second end of the sliding sleeve 512 extends out of the accommodating space 11 from the accommodating space 11, two sides of the sliding sleeve 512 are respectively connected to the runner module 60, the sliding sleeve 512 can reciprocally and telescopically slide relative to the mounting base 10, the sleeve rod 513 is sleeved in the sliding sleeve 512, and the sleeve rod 513 can telescopically slide relative to the sliding sleeve 512, a jaw 511 is provided at the first end of the sleeve rod 513, and the jaw 511 is used for abutting against and clamping the object to be clamped, the first locking assembly 514 is provided between the sliding sleeve 512 and the sleeve rod 513, the first locking assembly 514 is used for locking or unlocking the sleeve rod 513, and when the first locking assembly 514 is in a locked state, the sliding sleeve 512 and the sleeve rod 513 are relatively fixed, and when the first locking assembly 514 is in an unlocked state, the sleeve rod 513 is allowed to slide relative to the sliding sleeve 512.

Regarding the above-mentioned sliding sleeve 512 and sleeve rod 513, referring to FIG. 9, the sliding sleeve 512 is provided with a telescopic groove 5121, a first through-hole 5122, a first sliding groove 5123, a second sliding groove 5124 and a transition groove 5125. The telescopic groove 5121 extends from the second end of the sliding sleeve 512 to the first end of the sliding sleeve 512, and the telescopic groove 5121 is used for accommodating a sleeve rod 513, and the sleeve rod 513 reciprocally and telescopically moves relative to the sliding sleeve 512 within the telescopic groove 5121. A first through-hole 5122 is provided at one surface of the sliding sleeve 512, and the first through-hole 5122 communicates the telescopic groove 5121 with the outside, the first through-hole 5122 is used for passing the first locking assembly therethrough. The first sliding groove 5123 and the second sliding groove 5124 are respectively provided on two sides of the sliding sleeve 512, the first sliding groove 5123 and the second sliding groove 5124 are both used for abutting against the runner module 60, and the first sliding groove 5123 and the second sliding groove 5124 cooperate with the runner module 60 so that the sliding sleeve 512 slides back and forth in a unique direction relative to the mounting base 10. A transition groove 5125 is provided at the second end of the sliding sleeve 512, the transition groove 5125 communicates with the telescopic groove 5121 and is used for sliding the first locking assembly 514 so that the sleeve rod 513 can be retracted into the telescopic groove 5121. The sleeve rod 513 is provided with a mounting groove 5131 for mounting the first locking assembly 514.

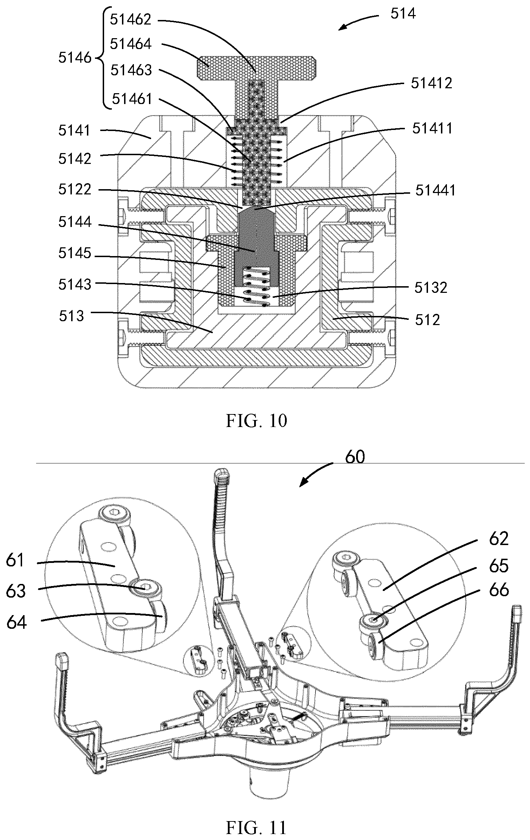

As for the first locking assembly 514 described above, referring to FIG. 10, the first locking assembly 514 includes a locking base 5141, a third elastic member 5142, a fourth elastic member 5143, a thimble 5144, a thimble base 5145, and a button 5146. A locking base 5141 is provided on the sliding sleeve 512, a third elastic member 5142 and a button 5146 are provided on the locking base 5141, and two ends of the third elastic member 5142 respectively abut against the sliding sleeve 512 and the button 5146. The fourth elastic member 5143, the thimble 5144 and the thimble base 5145 are all provided in the mounting groove 5131; the thimble base 5145 and the mounting groove 5131 together enclose a mounting cavity 5132; the thimble 5144 and the fourth elastic member 5143 are provided in the mounting cavity 5132; a first end of the fourth elastic member 5143 is fixed to a groove bottom of the mounting groove 5131; a second end of the fourth elastic member 5143 is fixed to a first end of the thimble 5144; and the second end of the thimble 5144 passes through the thimble base 5145 and is inserted into the first through-hole 5122.

The locking base 5141 is provided with a second through-hole 51411 and a second barrier 51412, where the second through-hole 51411 penetrates the locking base 5141, communicates with the first through-hole 5122 and is used for passing the button 5146 therethrough, the second barrier 51412 is provided at an end of the second through-hole 51411 away from the first through-hole 5122, and the second barrier 51412 is used for blocking the button 5146 from moving in a direction away from the first through-hole 5122 to prevent the button 5146 from being detached from the second through-hole 51411.

The second end of the thimble 5144 is provided with a transition 51441 that facilitates the thimble 5144 to exit the first through-hole 5122 when the first locking assembly 514 unlocks the sleeve rod 513. In some embodiments, the transition 51441 is hemispherical, or frustoconical, or conical, or pyramidal.

The button 5146 includes a pressing portion 51462 extending outward from a surface of the pressing portion 51462, and an extending portion 51461 inserted into the first through-hole 5122 from the second through-hole 51411 to abut against the transition 51441 of the thimble 5144. The side wall of the pressing portion 51462 is provided with a first barrier 51464 for cooperating with a second barrier 51412 to limit the range of movement of the button 5146 in a direction close to the first through-hole 5122, the extending portion 51461 is provided with a third barrier 51463 for cooperating with the second barrier 51412 to limit the range of movement of the button 5146 in a direction away from the first through-hole 5122, the second barrier 51412 is located between the first barrier 51464 and the third barrier 51463, and both ends of the third elastic member 5142 abut against the sliding sleeve 512 and the third barrier 51463, respectively.

Specifically, when an external force is applied to the pressing portion 51462, the pressing portion 51462 drives the extending portion 51461 to push the thimble 5144 out of the first through-hole 5122, the thimble 5144 retracts into the mounting cavity 5132, the sleeve rod 513 and the sliding sleeve 512 are in an unlocked state, the sleeve rod 513 can slide back and forth relative to the sliding sleeve 512, the second barrier 51412 blocks the movement of the first barrier 51464, preventing the extending portion 51461 from penetrating out of the first through-hole 5122 and entering the mounting cavity 5132, and hindering the movement of the sleeve rod 513. When the external force is removed, the third elastic member 5142 pushes the extending portion 51461 away from the first through-hole 5122, the second barrier 51412 blocks the movement of the third barrier 51463, prevents the extending portion 51461 from leaving the second through-hole 51411, and the button 5146 is disengaged from the locking base 5141. When the sleeve rod 513 is moved such that the thimble 5144 is again aligned with the first through-hole 5122, the fourth elastic member 5143 pushes the thimble 5144 out of the thimble holder 5145 and into the first through-hole 5122, the first locking assembly 514 is in a locked state, and the sleeve rod 513 and the sliding sleeve 512 are again relatively fixed.

In some embodiments, the third elastic member 5142 and the fourth elastic member 5143 are springs.

In some embodiments, the pressing portion 51462 and the extending portion 51461 of the button 5146 are independent structures, and the pressing portion 51462 and the extending portion 51461 are connected into the second through-hole 51411 from both ends of the second through-hole 51411, respectively.

In some embodiments, the sleeve rod 513 is provided with a plurality of mounting grooves 5131 which are provided at intervals along the extending direction of the sleeve rod 513, and the thimble 5144, the fourth elastic member 5143 and the thimble base 5145 are mounted in each mounting groove 5131. The thimble 5144, the fourth elastic member 5143, and the thimble holder 5145 are installed in the same manner as described above. The plurality of mounting grooves 5131 enable the sleeve rod 513 to be adjusted in the presence of a plurality of telescoping gears relative to the sliding sleeve 512.

Referring to FIG. 11, the runner module 60 includes a first mounting frame 61, a second mounting frame 62, a first runner 63, a second runner 64, a third runner 65, and a fourth runner 66. The first mounting frame 61 and the second mounting frame 62 are both provided on the mounting base 10, the first mounting frame 61 and the second mounting frame 62 are respectively located on two sides of the sliding sleeve 512, the first runner 63 and the second runner 64 are both rotatably provided on the first mounting frame 61, the first runner 63 and the second runner 64 are provided perpendicularly to each other, the first runner 63 abuts against the groove bottom of the first sliding groove 5123, and the second runner 64 abuts against the groove wall of the first sliding groove 5123. The third runner 65 and the fourth runner 66 are both rotatably provided on the second mounting frame 62, the third runner 65 and the fourth runner 66 are provided perpendicular to each other, the third runner 65 abuts against the groove bottom of the second sliding groove 5124, and the fourth runner 66 abuts against the groove wall of the second sliding groove 5124. The first runner 63, the second runner 64, the third runner 65 and the fourth runner 66 cooperate together so that the sliding groove has only one direction of movement for telescopic movement relative to the mounting base 10.

In some embodiments, the runner module 60 further includes a fifth runner, a sixth runner, a seventh runner and an eighth runner, where the fifth runner and the sixth runner are all rotatably provided on the first mounting frame 61, the fifth runner and the sixth runner are provided perpendicular to each other, the fifth runner is in contact with the groove bottom of the first sliding groove 5123, and the sixth runner is in contact with the groove wall of the first sliding groove 5123. The seventh runner and the eighth runner are both rotatably provided on the second mounting frame 62, the seventh runner and the eighth runner are provided perpendicular to each other, the seventh runner is in contact with the groove bottom of the second sliding groove 5124, and the eighth runner is in contact with the groove wall of the second sliding groove 5124. The first runner 63, the second runner 64, the third runner 65, the fourth runner 66, the fifth runner, the sixth runner, the seventh runner, and the eighth runner cooperate so that the sliding sleeve 512 is smoother when sliding relative to the mounting base 10.

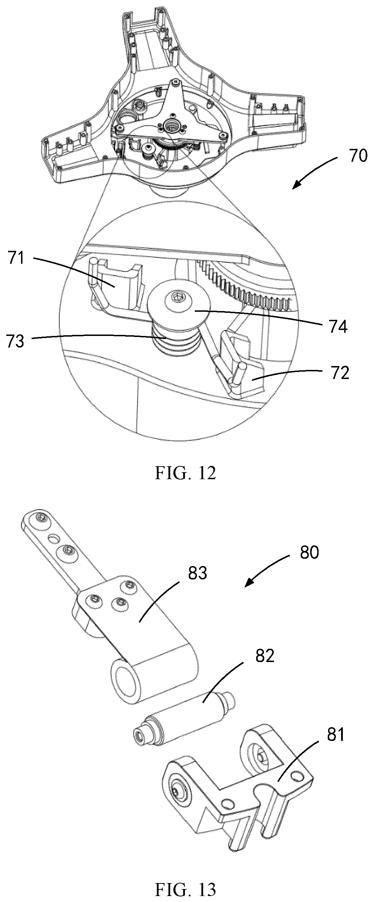

Regarding the above-mentioned limiting module 70, referring to FIG. 12, the limiting module 70 includes a first limiting protrusion 71, a second limiting protrusion 72, a limiting elastic member 73 and a limiting fixing member 74. The first limiting protrusion 71 and the second limiting protrusion 72 are fixedly provided on the mounting base 10; the limiting fixing member 74 fixes a limiting elastic member 73 on the mounting base 10; a first end of the limiting elastic member 73 abuts against the first limiting protrusion 71; the first end of the limiting elastic member 73 is used for limiting the range of motion of the rotating plate 21 in a first direction; a second end of the limiting elastic member 73 abuts against the second limiting protrusion 72; the second end of the limiting elastic member 73 is used for limiting the range of motion of the rotating plate 21 in a second direction; and the limiting elastic member 73 is used for preventing the rotating plate 21 from entering a rotation dead zone of the rotating plate 21 due to too large rotating amplitude, that is, the rotating plate 21, the connecting rod 22 and the sliding sleeve 512 are on the same straight line.

Regarding the second drive module 80 described above, referring to FIG. 13, the second drive module 80 includes a third mounting frame 81, a support shaft 82, and a coil spring 83. The third mounting frame 81 is fixedly provided on the mounting base 10, the support shaft 82 is provided on the third mounting frame 81, and the coil spring 83 is provided on the support shaft 82, and is connected to a first end of the sliding sleeve 512; when an external force is applied to the pull hook 52 to move the sliding sleeve 512 away from the mounting base 10, the coil spring 83 moves synchronously with the sliding sleeve 512, and at this time, the coil spring 83 is in a compressed state; when the external force is cancelled, the coil spring 83 drives the sliding sleeve 512 to move closer to the mounting base 10 against the elastic force of deformation, and the jaw 511 clamps an object to be clamped.

In some embodiments, the second drive module 80 includes a tension spring, both ends of which are connected to the mounting base 10 and the clamping assembly 51, respectively.

In some embodiments, the second drive module 80 includes a central coil spring 83 sleeved on the rotating shaft 12, the central coil spring 83 is connected to the rotating plate 21, and the central coil spring 83 is used for driving the rotating plate 21 to rotate.

Specifically, referring to FIGS. 1 to 13, when the clamping device 100 needs to clamp the object to be clamped, an external force is applied to the pull hook 52, so that the clamping assembly 51 moves away from the mounting base 10; at this time, the clamping device 100 is in a state to be clamped, and the coil spring 83 is in a compressed state; the handle 41 is in the start position 41a; the clamping device 100 is close to the object to be clamped, and the external force is withdrawn; under the elastic force of the coil spring 83, the clamping assembly 51 moves toward the mounting base 10, and the clamping assembly 51 initially clamps the object to be clamped, then an external force is applied to the handle 41, so that the handle 41 moves in a first direction; the handle 41 drives the second connector 42, the third connector 43 and the fourth connector 44 to move, thereby pushing the rotating portion 321, the detent 322, the first connector 324 and the ratchet stop 325 to rotate synchronously; under the action of the first elastic member 323, the first connector 324 and the limiting member 326, the ratchet stop 325 always abuts against and forms a curved protrusion to slide; when the handle 41 is in a second position, the ratchet 3221 engages with the ratchet wheel 31; the handle 41 is driven then to move from the second position to the end position 41b, the rotating portion 321 drives the ratchet wheel 31 and the rotating plate 21 to rotate synchronously, and the rotating plate 21 drives the clamping assembly 51 to move towards each other via the connecting rod 22 to completely clamp the object to be clamped.

Regarding different sizes of objects to be clamped, when the clamping device 100 initially clamps the objects to be clamped, the clamping assembly 51 is at different positions, and through the cooperation of the stroke curve protrusion 211 and the ratchet assembly 32, the position where the ratchet 3221 engages with the ratchet wheel 31 can be controlled, so that when clamping devices 100 clamp different sizes of objects to be clamped, the retraction length of the clamping assembly 51 relative to the mounting base 10 is the same from initially clamping the objects to completely clamping the objects to be clamped.

Advantageous effects in the embodiments of the present application are: the clamping device 100 includes a mounting base 10, a clamping module 50, a rotating module 20, a first drive module 40 and an engagement module 30; the clamping module 50 includes at least two clamping assemblies 51; the rotating module 20 includes a rotating plate 21 and at least two connecting rods 22; a first end of the connecting rod 22 is rotatably connected to the rotating plate 21; a second end of the connecting rod 22 is rotatably connected to a first end of the clamping assembly 51; the rotating plate 21 is provided with a stroke curve protrusion 211; the engagement module 30 includes a ratchet wheel 31 and a ratchet wheel assembly 32; the ratchet wheel 31 is coaxially and fixedly connected to the rotating plate 21; the ratchet assembly 32 is provided coaxially with the rotating plate 21, and the ratchet assembly 32 and the rotating plate 21 is movable relatively; the ratchet assembly 32 and the stroke curve protrusion 211 cooperate together so that the first drive module 40 drives the ratchet wheel 31 and the rotating plate 21 to rotate via the ratchet assembly 32; and the movement amplitude of the clamping module 50 located at any position relative to the mounting base 10 is the same. With the above-mentioned structure, the clamping device 100 can make the retraction amplitude of the clamping module 50 uniform when the clamping module 50 clamps the object to be clamped at any position, thereby making the clamping device 100 clamp the object to be clamped with uniform force.

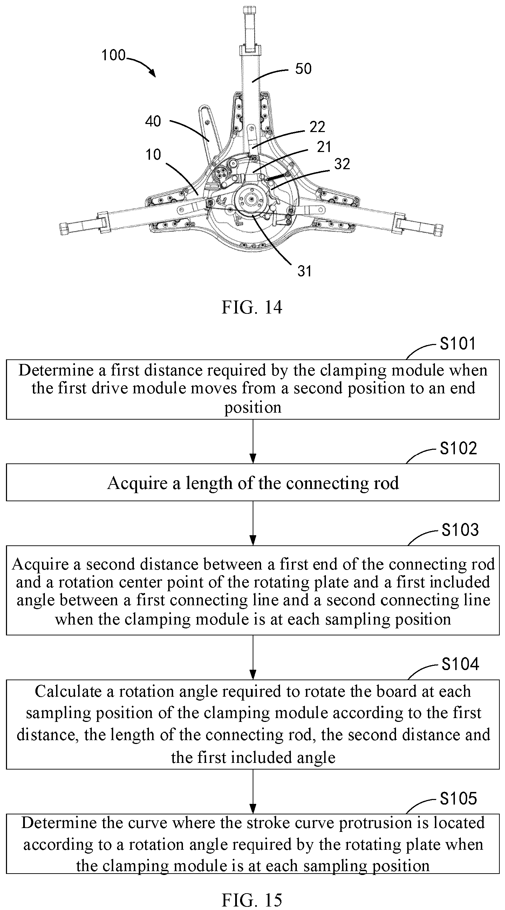

Reference is now made to FIG. 14, which is a schematic illustration of an application environment for a method for determining a curve on which a stroke curve protrusion of a clamping device is located according to an embodiment of the present application, the application environment including a clamping device 100 including a mounting base 10, a first drive module 40, a clamping module 50, a rotating plate 21, a connecting rod 22, a ratchet wheel 31 and a ratchet assembly 32.

The rotating plate 21, the ratchet wheel 31 and the ratchet assembly 32 are all rotatably provided on the mounting base 10; the rotating plate 21 and the ratchet wheel 31 are relatively fixed; the ratchet assembly 32 can rotate relative to the ratchet wheel 31 and the rotating plate 21; a first end of the connecting rod 22 is rotatably connected to the rotating plate 21; a second end of the connecting rod 22 is rotatably connected to the clamping module 50; the first drive module 40 drives the ratchet assembly 32 to rotate; and when the ratchet assembly 32 engages with the ratchet wheel 31, the ratchet assembly 32 rotates synchronously with the ratchet wheel 31 and the rotating plate 21 to drive the clamping module 50 to retract towards the mounting base 10.

FIG. 15 shows a flow chart of a method for determining a curve of a stroke curve protrusion of a clamping device according to the present application, as shown in FIG. 15, including the steps of:

S101 Determine a first distance required by the clamping module when the first drive module moves from a second position to an end position.

When the first drive module is at the second position, the ratchet assembly and the ratchet wheel change from a separated state to an engaged state, and in the process of moving from the second position to the end position, the first drive module drives the ratchet wheel and the rotating plate to rotate synchronously, and drives the clamping modules to move towards each other via the connecting rod (retracting relative to the mounting base).

The first distance is a distance preset by the user, i.e. the user wants to control the retraction distance of the clamping module relative to the mounting base during the movement of the first drive module from the second position to the end position, the first distance being a constant value.

S102 Acquire a length of the connecting rod.

S103 Acquire a second distance between a first end of the connecting rod and a rotation center point of the rotating plate and a first included angle between a first connecting line and a second connecting line when the clamping module is at each sampling position, where the first connecting line is a connecting line between the second end of the connecting rod and the rotation center point of the rotating plate, and the second line is a connecting line between the first end of the connecting rod and the rotation center point of the rotating plate.

The sampling position of the clamping module refers to the position of the clamping module relative to the mounting base, and each sampling position corresponds to a position where the ratchet assembly and the ratchet wheel are engaged; when the sampling positions of the clamping module are different, the engaging positions of the ratchet assembly and the ratchet wheel are different; therefore, different sampling positions of the ratchet module need to be acquired to solve different engaging positions of the ratchet assembly and the ratchet wheel.

S 104 Calculate a rotation angle required by the rotating plate when the clamping module is at each sampling position according to the first distance, the length of the connecting rod, the second distance and the first included angle.

The interconnection points among the connecting rod, the clamping module and the rotating plate may form a triangle, where the length of the connecting rod and the second distance are two sides of the triangle, and the first included angle is one included angle of the triangle, and the other side of the triangle, as well as the other two included angles, can be solved by the sine trigonometric function formula a / sin∠A =b / sin LB=c / sin∠C.

After retracting the clamping module by the first distance, a new triangle will be formed, by using the sine trigonometric function formula or cosine trigonometric function formula: a²=b²+c²-2bc cosA,b²=a²+c²-2ac cosB,c²=a²+b²-2bc cosC, the length and included angle of each side of the new triangle can be obtained, so that the required rotation angle of the rotating plate can be calculated.

S105 Determine the curve of the stroke curve protrusion according to the rotation angle required to rotate the plate when the clamping module is in each sampling position.

When the clamping module is at different sampling positions, the corresponding rotation angles are also different; after the rotation angle obtained by reversely rotating the first drive module from the end position, the position where the ratchet assembly engages with the ratchet wheel is a second position, and the curves where several second positions are located are curves where the stroke curve protrusion is located.

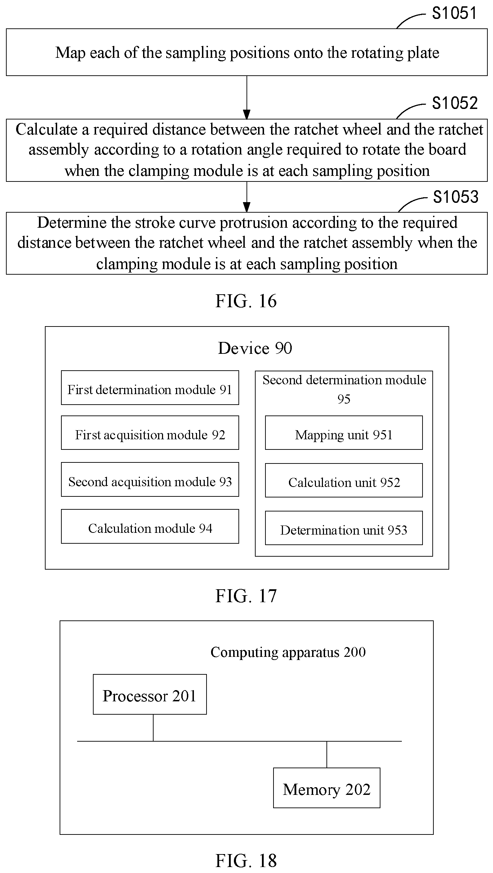

In some embodiments, referring to FIG. 16, step S105 includes:
S1051 Map each of the sampling positions onto the rotating plate.
S1052 Calculate a required distance between the ratchet wheel and the ratchet assembly according to a rotation angle required to rotate the plate when the clamping module is in each sampling position.
S1053 Determine the stroke curve protrusion according to the required distance between the ratchet wheel and the ratchet assembly when the clamping module is in each sampling position.

The present application also provides an embodiment of an apparatus for determining the curve on which the stroke curve protrusion of a clamping device is located. Referring to FIG. 17, FIG. 17 shows a functional block diagram of a device 90 for determining the curve on which the stroke curve protrusion of a clamping device is located, the apparatus 90 including a first determination module 91, a first acquisition module 92, a second acquisition module 93, a calculation module 94 and a second determination module 95. A first determination module 91 is configured to determine a first distance required by the clamping module when the first drive module moves from a second position to an end position; a first acquisition module 92 is configured to acquire a length of the connecting rod; a second acquisition module 93 is configured to acquire a second distance between a first end of the connecting rod and a rotation center point of the rotating plate and a first included angle between a first connecting line and a second connecting line when the clamping module is at each sampling position, where the first connecting line is a connecting line between the second end of the connecting rod and the rotation center point of the rotating plate, and the second line is a connecting line between the first end of the connecting rod and the rotation center point of the rotating plate; a calculation module 94 is configured to calculate a rotation angle required by the rotating plate when the clamping module is at each sampling position according to the first distance, the length of the connecting rod, the second distance and the first included angle; and a second determination module 95 is configured to determine the curve of the stroke curve protrusion according to the rotation angle required to rotate the plate when the clamping module is in each sampling position.

The second determination module 95 includes a mapping unit 951, a calculation unit 952 and a determination unit 953. A mapping unit 951 is configured to map each of the sampling positions onto the rotating plate; a calculation unit 952 is configured to calculate a required distance between the ratchet wheel and the ratchet assembly according to a rotation angle required to rotate the plate when the clamping module is in each sampling position; and a determination unit 953 is configured to determine the stroke curve protrusion according to the required distance between the ratchet wheel and ratchet assembly when the clamping module is in each sampling position.

The present application also provides an embodiment of a computing apparatus 200, see FIG. 18, which is a schematic diagram of an embodiment of a computing apparatus 200 of the present application, the controller of the computing apparatus 200 including: at least one processor 201; and a memory 202 communicatively coupled to the at least one processor 201, one of which is exemplified in FIG. 18. The memory 202 stores instructions that are executable by the at least one processor 201 to enable the at least one processor 201 to perform a method for determining a curve of a curve of travel of a clamping device as described above referring to FIGS. 15-16 and a device for determining a curve of a curve of travel of a clamping device as described above referring to FIG. 17. The processors 201 and the memory 202 may be connected via a bus or in other ways, and via a bus connection exemplified in FIG. 18.

The memory 202 is a non-volatile computer-readable storage medium that may be used to store a non-volatile software program, a non-volatile computer-executable program, and modules, such as program instructions/modules corresponding to a method for determining a curve of a stroke curve protrusion of a clamping device in an embodiment of the present application, such as the modules shown in FIG. 17. The processor 201 executes various functional applications of the server and data processing by running non-volatile software programs, instructions and modules stored in the memory 202, i.e., implementing a method for determining the curve on which the stroke curve protrusion of the clamping device is located, according to the embodiments of the method described above.

The memory 202 may include a program storage area and a data storage area, where the program storage area may store an operating system and an application program required by at least one function; the data storage area may store data or the like created from the use of a device that determines the curve on which the stroke curve of the clamping device is located. The memory 202 may include a high-speed random access memory and may also include a non-volatile memory, such as at least one magnetic disk storage apparatus, flash memory apparatus, or other non-volatile solid state storage apparatuses. In some embodiments, the memory 202 may optionally include memory remotely located with respect to the processor 201, which may be connected via a network to a device for determining the curve of the stroke curve protrusion of the clamping device. Examples of such networks include, but are not limited to, the Internet, intranets, local area networks, mobile communication networks, and combinations thereof.

The one or more modules are stored in the memory 202 and, when executed by the one or more processors 201, perform a method for determining the curve on which the curve of the stroke curve of the clamping device is located in any of the method embodiments described above, e.g. perform the method steps of FIGS. 15 to 16 described above, and perform a device for determining the curve on which the curve of the stroke curve of the clamping device is located as described above in FIG. 17.

The above-mentioned product can execute the method provided in the embodiment of the present application, and has corresponding functional modules and advantageous effects for executing the method. For the technical details not described in detail in the embodiment, reference can be made to the method provided in the embodiment of the present application.

Embodiments of the present application also provide a non-volatile computer-readable storage medium having stored thereon computer-executable instructions that are executed by one or more processors, e.g. to perform the method steps of determining a curve on which a curve of travel of a clamping device is projected described above with respect to FIGS. 15-16, and to perform the apparatus for determining a curve on which a curve of travel of a clamping device is projected described above with respect to FIG. 17.

Embodiments of the present application also provide a computer program product including a computer program stored on a non-volatile computer readable storage medium, the computer program including program instructions which, when executed by a computer, cause the computer to perform a method for determining a curve on which a curve on which a stroke curve protrusion of a clamping device is located is to be located in any of the method embodiments described above, for example, performing the method steps of FIGS. 15 to 16 described above, and performing a device for determining a curve on which a curve on which a stroke curve protrusion of a clamping device is located is to be located as described above in FIG. 17.

The above description is only a particular embodiment of the present application, but the scope of protection of the present application is not limited thereto, and changes or substitutions thereof will readily occur to a person skilled in the art within the scope of the present disclosure, and these are intended to be within the scope of protection of the present application. Therefore, the scope of protection of this application should be determined by the scope of protection of the claims.

## Claims

1. A clamping device (100) configured for clamping a vehicle tire, **characterized by** comprising:
a mounting base (10);
a clamping module (50) comprising at least two clamping assemblies (51), wherein the at least two clamping assemblies (51) are both provided on the mounting base (10), and the at least two clamping assemblies (51) are movable with respect to the mounting base (10);
a rotating module (20) comprising a rotating plate (21) and at least two connecting rods (22), wherein the rotating plate (21) is rotatably provided on the mounting base (10), first ends of the at least two connecting rods (22) are both rotatably connected to the rotating plate (21), a second end of one of the connecting rods (22) is rotatably connected to one of the clamping assemblies (51), and the rotating plate (21) is provided with a stroke curve protrusion (211);
a first drive module (40) provided on the mounting base (10);
an engagement module (30) comprising a ratchet wheel (31) and a ratchet assembly (32), wherein the ratchet wheel (31) is fixed to the rotating plate (21), the ratchet assembly (32) is rotatable relative to the rotating plate (21), the first drive module (40) is connected to the ratchet assembly (32), and when the first drive module (40) is driven, the first drive module (40) drives the ratchet assembly (32) to move relative to the rotating module (20), wherein when the first drive module (40) is located at a first position, the ratchet wheel (31) and the ratchet assembly (32) are separated, when the first drive module (40) is located at a second position, the ratchet wheel (31) and the ratchet assembly (32) are engaged, and when the first drive module (40) is located at an end position, the first drive module (40) is locked, and when the first drive module (40) moves from a second position to an end position, the ratchet assembly (32) drives the ratchet wheel (31) to rotate, thereby driving the rotating module (20) to rotate;
when the rotating plate (21) rotates, the stroke curve protrusion (211) being used for adjusting the distance between the ratchet wheel (31) and the ratchet assembly (32), so that when the clamping module (50) is at different positions, the second position is different, so that when the first drive module (40) moves from the second position to the end position, the rotating plate (21) rotates at different angles, and the moving distance of the clamping module (50) at different positions relative to the mounting base (10) remains the same.

2. The clamping device (100) according to claim 1, **characterized in that**
the ratchet assembly (32) comprises a rotating portion (321), a detent (322), a first elastic member (323), a first connector (324), a ratchet stop (325) and a limiting member (326), the rotating portion (321) is provided coaxially with the rotating module (20), and the rotating portion (321) is rotatable relative to the rotating module (20), a first end of the detent (322) is connected to the rotating portion (321), a first end of the first elastic member (323) is connected to the mounting base (10), a second end of the first elastic member (323) is connected to the first end of the detent (322), the second end of the detent (322) is provided with a ratchet (3221), and the first end of the first connector (324) is rotatably connected to the rotating portion (321);
the second end of the first connector (324) is rotatably connected to the first end of the ratchet stop (325), the first end of the ratchet stop (325) is provided with a first protrusion (3251), the first protrusion (3251) abuts against the second end of the detent (322), the first end of the ratchet stop (325) abuts against the stroke curve protrusion (211), the limiting member (326) is fixed to the mounting base (10), and the second end of the ratchet stop (325) abuts against the limiting member (326);
when the first drive module (40) drives the rotating portion (321) to rotate, the rotating portion (321) rotates with respect to the ratchet wheel (31), under the action of the first elastic member (323), the ratchet of the second end of the detent (322) approaches the ratchet wheel (31), the ratchet stop (325) always abuts against the stroke curve protrusion (211) under the action of the first connector (324) and the limiting member (326), the ratchet stop (325) rotates with respect to the first connector (324), the first protrusion (3251) of the first end of the ratchet stop (325) approaches the ratchet wheel (31), until the ratchet engages the ratchet wheel (31) when the first drive module (40) is at the second position, the first drive module (40) continues to drive the rotating portion (321) to move, and the detent (322) moves the ratchet wheel (31) so that the rotating plate (21) moves the clamping assembly (51) via the connecting rod (22).

3. The clamping device (100) according to claim 1, **characterized in that**
the first drive module (40) comprises a handle (41), a second connector (42), a third connector (43) and a fourth connector (44);
a first end of the handle (41) is rotatably provided on the mounting base (10), a second protrusion (411) extends from the first end of the handle (41), a first end of the second connector (42) is rotatably connected to the second protrusion (411), a first end of the third connector (43) is rotatably connected to the mounting base (10), a second end of the third connector (43), a second end of the second connector (42) and a first end of the fourth connector (44) are rotatably connected, and a second end of the fourth connector (44) is rotatably connected to the rotating portion (321);
when the handle (41) rotates from a start position (41a) to an end position (41b) and drives the second connector (42), the third connector (43) and the fourth connector (44) to move via the second protrusion (411) to push the rotating portion (321) to rotate; when the third connector (43) and the fourth connector (44) are in the same straight line, the first drive module (40) is in a self-locked state to lock the rotating portion (321); and when the handle (41) rotates from the end position (41b) to the start position (41a), the handle (41) drives the second connector (42), the third connector (43) and the fourth connector (44) to move via the second protrusion (411), the third connector (43) and the fourth connector (44) are not in the same straight line, the first drive module (40) is in an unlocked state, and the rotating portion (321) is movable relative to the mounting base (10).

4. The clamping device (100) according to claim 3, **characterized in that**
the fourth connector (44) comprises a compression outer cylinder (441), a compression rod (442) and a second elastic member (443), a first end of the compression rod (442) is rotatably connected to a second end of the third connector (43) and a second end of the second connector (42), a second end of the compression rod (442) is sleeved with the compression outer cylinder (441), the compression outer cylinder (441) is rotatably connected to the rotating portion (321), the second elastic member (443) is provided inside the compression outer cylinder (441), two ends of the second elastic member (443) respectively abut against the compression rod (442) and the compression outer cylinder (441), the compression rod (442) is telescopically movable inside the compression outer cylinder (441), and the second elastic member (443) serves to cushion the movement between the compression rod (442) and the compression outer cylinder (441).

5. The clamping device (100) according to claim 1, **characterized in that**
the clamping assembly (51) comprises a jaw (511), a sliding sleeve (512), a sleeve rod (513) and a first locking module (514);
the sliding sleeve (512) is provided on the mounting base (10), the sliding sleeve (512) is movable relative to the mounting base (10), a first end of the sliding sleeve (512) of one of the clamping assemblies (51) is rotatably connected to a second end of one of the connecting rods (22), the sliding sleeve (512) is provided with a telescopic groove (5121), and the telescopic groove (5121) extends from the second end of the sliding sleeve (512) to the first end of the sliding sleeve (512);
the jaw (511) is fixed to a first end of the sleeve rod (513), a second end of the sleeve rod (513) is inserted into a telescopic groove (5121) of the sliding sleeve (512) from a second end of the sliding sleeve (512), and the sleeve rod (513) is movable along the telescopic groove (5121) so that the first end of the sleeve rod (513) moves in a direction away from the sliding sleeve (512) or moves in a direction close to the sliding sleeve (512);
the first locking module (514) is provided on the sliding sleeve (512) and the sleeve rod (513), and when the first locking module (514) is in a locked state, the sliding sleeve (512) and the sleeve rod (513) are fixed, and when the first locking module (514) is in an unlocked state, the sleeve rod (513) is allowed to slide relative to the sliding sleeve (512).

6. The clamping device according to claim 5, **characterized in that**
the first locking module (514) comprises a locking base (5141), a third elastic member (5142), a fourth elastic member (5143), a thimble (5144) and a button (5146);
the sliding sleeve (512) is provided with a first through-hole (5122) in communication with the telescopic groove (5121), the locking base (5141) is fixed to the sliding sleeve (512) and provided with a second through-hole (51411), the second through-hole (51411) is in communication with the first through-hole (5122), the button (5146) comprises a pressing portion (51462) and an extending portion (51461) extending from the pressing portion (51462), the extending portion (51461) is inserted into the second through-hole (51411), and the extending portion (51461) is movable along the second through-hole (51411) and is inserted into the first through-hole (5122) from the second through-hole (51411) or retracted into the second through-hole (51411) from the first through-hole (5122), and the third elastic member (5142) is located in the second through-hole (51411); a first end of the third elastic member (5142) abuts against the pressing portion (51462), and a second end of the third elastic member (5142) abuts against the sliding sleeve (512);
the sleeve rod (513) is provided with a mounting groove (5131), the fourth elastic member (5143) and the thimble (5144) are provided in the mounting groove (5131), a first end of the fourth elastic member (5143) is fixed to a groove bottom of the mounting groove (5131), and a second end of the fourth elastic member (5143) is fixed to a first end of the thimble (5144);
when the sleeve rod (513) slides to a position where the first through-hole (5122) corresponds to the mounting groove (5131), under the action of the fourth elastic member (5143), the second end of the thimble (5144) protrudes from the notch of the mounting groove (5131) and is inserted into the first through-hole (5122), and the first locking module (514) is in a locked state; and when the pressing portion (51462) is forced towards the sleeve rod (513), the extending portion (51461) is inserted into the first through-hole (5122) from the second through-hole (51411), and the second end of the thimble (5144) is pushed out of the first through-hole (5122), the first locking module (514) is in an unlocked state.

7. The clamping device (100) according to claim 6, **characterized in that**
a first barrier (51464) extends from a side wall of the pressing portion (51462);
the locking base (5141) is provided with a second barrier (51412) located at an end of the second through-hole (51411) away from the first through-hole (5122), and the second barrier (51412) is used for blocking the first barrier (51464).

8. The clamping device (100) according to claim 6, **characterized in that**
the third elastic member (5142) is a spring and is sleeved over the extending portion (51461), and/or the second end of the thimble (5144) is provided with a transition (51441).

9. The clamping device (100) according to claim 1, **characterized in that**
the clamping device (100) further comprises at least two runner modules (60), each of the at least two runner modules (60) being fixed to the mounting base (10), a sliding sleeve (512) of one of the clamping assemblies (51) being slidably provided on one of the runner modules (60).

10. The clamping device (100) according to claim 9, **characterized in that**
the runner module (60) comprises a first mounting frame (61), a second mounting frame (62), a first runner (63), a second runner (64), a third runner (65) and a fourth runner (66), wherein the first mounting frame (61) and the second mounting frame (62) are relatively fixed to the mounting base (10), the first runner (63) and the second runner (64) are rotatably provided on the first mounting frame (61), the first runner (63) and the second runner (64) both abut against a first side surface of the sliding sleeve (512), the first runner (63) and the second runner (64) are provided perpendicular to each other, and the third runner (65) and the fourth runner (66) are rotatably provided on the second mounting frame (62); the third runner (65) and the fourth runner (66) each abut against a second side surface of the sliding sleeve (512), and the third runner (65) and the fourth runner (66) are provided perpendicular to each other.

11. A computer implemented method for determining a curve of a stroke curve protrusion (211) in the clamping device (100) according to any one of claims 1 to 10, **characterized in that** the method comprises:
determining a first distance required by the clamping module (50) when the first drive module (40) moves from a second position to an end position;
acquiring a length of the connecting rod (22);
acquiring a second distance between a first end of the connecting rod (22) and a rotation center point of the rotating plate (21) and a first included angle between a first connecting line and a second connecting line when the clamping module (50) is at each sampling position, wherein the first connecting line is a connecting line between the second end of the connecting rod (22) and the rotation center point of the rotating plate (21), and the second line is a connecting line between the first end of the connecting rod (22) and the rotation center point of the rotating plate (21);
calculating a rotation angle required by the rotating plate (21) when the clamping module (50) is at each sampling position according to the first distance, the length of the connecting rod (22) , the second distance and the first included angle; and
determining the curve of the stroke curve protrusion (211) according to the rotation angle required to rotate the plate when the clamping module (50) is at each sampling position.

12. The method according to claim **11,** the step of determining the curve of the stroke curve protrusion (211) according to the rotation angle required to rotate the plate (21) when the clamping module (50) is at each sampling position further comprising:
mapping each of the sampling positions onto the rotating plate (21);
calculating a distance required between the ratchet wheel (31) and the ratchet assembly (32) according to a rotation angle required to rotate the plate (21) when the clamping module (50) is at each sampling position; and
determining the stroke curve protrusion (211) according to the distance required between the ratchet wheel (31) and the ratchet assembly (32) when the clamping module (50) is at each sampling position.

13. A computing apparatus (200), **characterized by** comprising:
a controller comprising: at least one processor (201) and a memory (202) communicatively connected to the at least one processor (201);
wherein the memory (202) stores instructions executable by the at least one processor (201), the instructions being executed by the at least one processor (201) to enable the at least one processor (201) to perform the method according to any one of claims 11 and 12.

14. A non-transitory computer-readable storage medium storing computer-executable instructions for causing a server to perform the method according to any one of claims 11 and 12.

## Patentansprüche

1. Spannvorrichtung (100), die zum Spannen eines Fahrzeugreifens ausgebildet ist, **dadurch gekennzeichnet, dass** sie Folgendes umfasst:
eine Montagebasis (10);
ein Spannmodul (50), das mindestens zwei Spannbaugruppen (51) umfasst, wobei die mindestens zwei Spannbaugruppen (51) beide an der Montagebasis (10) vorgesehen sind und die mindestens zwei Spannbaugruppen (51) relativ zur Montagebasis (10) bewegbar sind;
ein Drehmodul (20), das eine Drehplatte (21) und mindestens zwei Verbindungsstangen (22) umfasst, wobei die Drehplatte (21) drehbar an der Montagebasis (10) vorgesehen ist, erste Enden der mindestens zwei Verbindungsstangen (22) beide drehbar mit der Drehplatte (21) verbunden sind, ein zweites Ende einer der Verbindungsstangen (22) drehbar mit einer der Spannbaugruppen (51) verbunden ist und die Drehplatte (21) mit einem Hubkurvenvorsprung (211) versehen ist;
ein erstes Antriebsmodul (40), das an der Montagebasis (10) vorgesehen ist;
ein Eingriffsmodul (30), das ein Ratschenrad (31) und eine Ratschenbaugruppe (32) umfasst, wobei das Ratschenrad (31) an der Drehplatte (21) befestigt ist, die Ratschenbaugruppe (32) relativ zur Drehplatte (21) drehbar ist, das erste Antriebsmodul (40) mit der Ratschenbaugruppe (32) verbunden ist und, wenn das erste Antriebsmodul (40) angetrieben wird, das erste Antriebsmodul (40) die Ratschenbaugruppe (32) antreibt, sich relativ zum Drehmodul (20) zu bewegen, wobei, wenn sich das erste Antriebsmodul (40) an einer ersten Position befindet, das Ratschenrad (31) und die Ratschenbaugruppe (32) getrennt sind, wenn sich das erste Antriebsmodul (40) an einer zweiten Position befindet, das Ratschenrad (31) und die Ratschenbaugruppe (32) in Eingriff stehen, und wenn sich das erste Antriebsmodul (40) an einer Endposition befindet, das erste Antriebsmodul (40) verriegelt ist, und wenn sich das erste Antriebsmodul (40) von einer zweiten Position in eine Endposition bewegt, die Ratschenbaugruppe (32) das Ratschenrad (31) zum Drehen antreibt und dadurch das Drehmodul (20) zum Drehen antreibt;
wobei, wenn sich die Drehplatte (21) dreht, der Hubkurvenvorsprung (211) zum Einstellen des Abstands zwischen dem Ratschenrad (31) und der Ratschenbaugruppe (32) verwendet wird, so dass, wenn sich das Spannmodul (50) an verschiedenen Positionen befindet, die zweite Position unterschiedlich ist, so dass, wenn sich das erste Antriebsmodul (40) von der zweiten Position in die Endposition bewegt, sich die Drehplatte (21) um verschiedene Winkel dreht und der Bewegungsabstand des Spannmoduls (50) an verschiedenen Positionen relativ zur Montagebasis (10) gleich bleibt.

2. Spannvorrichtung (100) nach Anspruch 1, **dadurch gekennzeichnet, dass**
die Ratschenbaugruppe (32) einen Drehabschnitt (321), eine Klinke (322), ein erstes elastisches Element (323), einen ersten Verbinder (324), einen Ratschenanschlag (325) und ein Begrenzungselement (326) umfasst, der Drehabschnitt (321) koaxial mit dem Drehmodul (20) vorgesehen ist und der Drehabschnitt (321) relativ zum Drehmodul (20) drehbar ist, ein erstes Ende der Klinke (322) mit dem Drehabschnitt (321) verbunden ist, ein erstes Ende des ersten elastischen Elements (323) mit der Montagebasis (10) verbunden ist, ein zweites Ende des ersten elastischen Elements (323) mit dem ersten Ende der Klinke (322) verbunden ist, das zweite Ende der Klinke (322) mit einer Ratsche (3221) versehen ist und das erste Ende des ersten Verbinders (324) drehbar mit dem Drehabschnitt (321) verbunden ist;
das zweite Ende des ersten Verbinders (324) drehbar mit dem ersten Ende des Ratschenanschlags (325) verbunden ist, das erste Ende des Ratschenanschlags (325) mit einem ersten Vorsprung (3251) versehen ist, der erste Vorsprung (3251) an dem zweiten Ende der Klinke (322) anliegt, das erste Ende des Ratschenanschlags (325) an dem Hubkurvenvorsprung (211) anliegt, das Begrenzungselement (326) an der Montagebasis (10) befestigt ist und das zweite Ende des Ratschenanschlags (325) an dem Begrenzungselement (326) anliegt;
wenn das erste Antriebsmodul (40) den Drehabschnitt (321) zum Drehen antreibt, sich der Drehabschnitt (321) relativ zum Ratschenrad (31) dreht, sich unter der Wirkung des ersten elastischen Elements (323) die Ratsche des zweiten Endes der Klinke (322) dem Ratschenrad (31) nähert, der Ratschenanschlag (325) unter der Wirkung des ersten Verbinders (324) und des Begrenzungselements (326) stets an dem Hubkurvenvorsprung (211) anliegt, sich der Ratschenanschlag (325) relativ zum ersten Verbinder (324) dreht, sich der erste Vorsprung (3251) des ersten Endes des Ratschenanschlags (325) dem Ratschenrad (31) nähert, bis die Ratsche in das Ratschenrad (31) eingreift, wenn sich das erste Antriebsmodul (40) an der zweiten Position befindet, das erste Antriebsmodul (40) den Drehabschnitt (321) weiter zum Bewegen antreibt und die Klinke (322) das Ratschenrad (31) bewegt, so dass die Drehplatte (21) die Spannbaugruppe (51) über die Verbindungsstange (22) bewegt.

3. Spannvorrichtung (100) nach Anspruch 1, **dadurch gekennzeichnet, dass**
das erste Antriebsmodul (40) einen Griff (41), einen zweiten Verbinder (42), einen dritten Verbinder (43) und einen vierten Verbinder (44) umfasst;
ein erstes Ende des Griffs (41) drehbar an der Montagebasis (10) vorgesehen ist, sich ein zweiter Vorsprung (411) von dem ersten Ende des Griffs (41) erstreckt, ein erstes Ende des zweiten Verbinders (42) drehbar mit dem zweiten Vorsprung (411) verbunden ist, ein erstes Ende des dritten Verbinders (43) drehbar mit der Montagebasis (10) verbunden ist, ein zweites Ende des dritten Verbinders (43), ein zweites Ende des zweiten Verbinders (42) und ein erstes Ende des vierten Verbinders (44) drehbar verbunden sind und ein zweites Ende des vierten Verbinders (44) drehbar mit dem Drehabschnitt (321) verbunden ist;
wenn sich der Griff (41) von einer Startposition (41a) in eine Endposition (41b) dreht und den zweiten Verbinder (42), den dritten Verbinder (43) und den vierten Verbinder (44) über den zweiten Vorsprung (411) zum Bewegen antreibt, um den Drehabschnitt (321) zum Drehen zu drücken; wenn der dritte Verbinder (43) und der vierte Verbinder (44) auf derselben Geraden liegen, sich das erste Antriebsmodul (40) in einem selbstverriegelten Zustand befindet, um den Drehabschnitt (321) zu verriegeln; und wenn sich der Griff (41) von der Endposition (41b) in die Startposition (41a) dreht, der Griff (41) den zweiten Verbinder (42), den dritten Verbinder (43) und den vierten Verbinder (44) über den zweiten Vorsprung (411) zum Bewegen antreibt, der dritte Verbinder (43) und der vierte Verbinder (44) nicht auf derselben Geraden liegen, sich das erste Antriebsmodul (40) in einem entriegelten Zustand befindet und der Drehabschnitt (321) relativ zur Montagebasis (10) bewegbar ist.

4. Spannvorrichtung (100) nach Anspruch 3, **dadurch gekennzeichnet, dass**
der vierte Verbinder (44) einen äußeren Druckzylinder (441), eine Druckstange (442) und ein zweites elastisches Element (443) umfasst, ein erstes Ende der Druckstange (442) drehbar mit einem zweiten Ende des dritten Verbinders (43) und einem zweiten Ende des zweiten Verbinders (42) verbunden ist, ein zweites Ende der Druckstange (442) mit dem äußeren Druckzylinder (441) hülsenartig verbunden ist, der äußere Druckzylinder (441) drehbar mit dem Drehabschnitt (321) verbunden ist, das zweite elastische Element (443) im Inneren des äußeren Druckzylinders (441) vorgesehen ist, zwei Enden des zweiten elastischen Elements (443) jeweils an der Druckstange (442) und dem äußeren Druckzylinder (441) anliegen, die Druckstange (442) teleskopartig im Inneren des äußeren Druckzylinders (441) bewegbar ist und das zweite elastische Element (443) dazu dient, die Bewegung zwischen der Druckstange (442) und dem äußeren Druckzylinder (441) zu dämpfen.

5. Spannvorrichtung (100) nach Anspruch 1, **dadurch gekennzeichnet, dass**
die Spannbaugruppe (51) eine Backe (511), eine Gleithülse (512), eine Hülsenstange (513) und ein erstes Verriegelungsmodul (514) umfasst;
die Gleithülse (512) an der Montagebasis (10) vorgesehen ist, die Gleithülse (512) relativ zur Montagebasis (10) bewegbar ist, ein erstes Ende der Gleithülse (512) einer der Spannbaugruppen (51) drehbar mit einem zweiten Ende einer der Verbindungsstangen (22) verbunden ist, die Gleithülse (512) mit einer Teleskopnut (5121) versehen ist und sich die Teleskopnut (5121) vom zweiten Ende der Gleithülse (512) zum ersten Ende der Gleithülse (512) erstreckt;
die Backe (511) an einem ersten Ende der Hülsenstange (513) befestigt ist, ein zweites Ende der Hülsenstange (513) von einem zweiten Ende der Gleithülse (512) in eine Teleskopnut (5121) der Gleithülse (512) eingesetzt ist und die Hülsenstange (513) entlang der Teleskopnut (5121) bewegbar ist, so dass sich das erste Ende der Hülsenstange (513) in eine Richtung weg von der Gleithülse (512) bewegt oder sich in eine Richtung nahe der Gleithülse (512) bewegt;
das erste Verriegelungsmodul (514) an der Gleithülse (512) und der Hülsenstange (513) vorgesehen ist, und wenn sich das erste Verriegelungsmodul (514) in einem verriegelten Zustand befindet, die Gleithülse (512) und die Hülsenstange (513) fixiert sind, und wenn sich das erste Verriegelungsmodul (514) in einem entriegelten Zustand befindet, es der Hülsenstange (513) erlaubt ist, relativ zur Gleithülse (512) zu gleiten.

6. Spannvorrichtung nach Anspruch 5, **dadurch gekennzeichnet, dass**
das erste Verriegelungsmodul (514) eine Verriegelungsbasis (5141), ein drittes elastisches Element (5142), ein viertes elastisches Element (5143), einen Stößel (5144) und einen Knopf (5146) umfasst;
die Gleithülse (512) mit einem ersten Durchgangsloch (5122) versehen ist, das mit der Teleskopnut (5121) in Verbindung steht, die Verriegelungsbasis (5141) an der Gleithülse (512) befestigt und mit einem zweiten Durchgangsloch (51411) versehen ist, das zweite Durchgangsloch (51411) mit dem ersten Durchgangsloch (5122) in Verbindung steht, der Knopf (5146) einen Druckabschnitt (51462) und einen sich von dem Druckabschnitt (51462) erstreckenden Verlängerungsabschnitt (51461) umfasst, der Verlängerungsabschnitt (51461) in das zweite Durchgangsloch (51411) eingesetzt ist und der Verlängerungsabschnitt (51461) entlang des zweiten Durchgangslochs (51411) bewegbar ist und vom zweiten Durchgangsloch (51411) in das erste Durchgangsloch (5122) eingesetzt oder vom ersten Durchgangsloch (5122) in das zweite Durchgangsloch (51411) zurückgezogen wird, und das dritte elastische Element (5142) im zweiten Durchgangsloch (51411) angeordnet ist; ein erstes Ende des dritten elastischen Elements (5142) an dem Druckabschnitt (51462) anliegt und ein zweites Ende des dritten elastischen Elements (5142) an der Gleithülse (512) anliegt;
die Hülsenstange (513) mit einer Montagenut (5131) versehen ist, das vierte elastische Element (5143) und der Stößel (5144) in der Montagenut (5131) vorgesehen sind, ein erstes Ende des vierten elastischen Elements (5143) an einem Nutgrund der Montagenut (5131) befestigt ist und ein zweites Ende des vierten elastischen Elements (5143) an einem ersten Ende des Stößels (5144) befestigt ist;
wenn die Hülsenstange (513) in eine Position gleitet, in der das erste Durchgangsloch (5122) der Montagenut (5131) entspricht, unter der Wirkung des vierten elastischen Elements (5143) das zweite Ende des Stößels (5144) aus der Aussparung der Montagenut (5131) hervorsteht und in das erste Durchgangsloch (5122) eingesetzt ist und sich das erste Verriegelungsmodul (514) in einem verriegelten Zustand befindet; und wenn der Druckabschnitt (51462) zur Hülsenstange (513) hin gedrückt wird, der Verlängerungsabschnitt (51461) vom zweiten Durchgangsloch (51411) in das erste Durchgangsloch (5122) eingesetzt wird und das zweite Ende des Stößels (5144) aus dem ersten Durchgangsloch (5122) herausgedrückt wird, sich das erste Verriegelungsmodul (514) in einem entriegelten Zustand befindet.

7. Spannvorrichtung (100) nach Anspruch 6, **dadurch gekennzeichnet, dass**
sich eine erste Sperre (51464) von einer Seitenwand des Druckabschnitts (51462) erstreckt;
die Verriegelungsbasis (5141) mit einer zweiten Sperre (51412) versehen ist, die sich an einem Ende des zweiten Durchgangslochs (51411) entfernt vom ersten Durchgangsloch (5122) befindet, und die zweite Sperre (51412) zum Blockieren der ersten Sperre (51464) verwendet wird.

8. Spannvorrichtung (100) nach Anspruch 6, **dadurch gekennzeichnet**, dassdas dritte elastische Element (5142) eine Feder ist und über den Verlängerungsabschnitt (51461) gestülpt ist und/oder das zweite Ende des Stößels (5144) mit einem Übergang (51441) versehen ist.

9. Spannvorrichtung (100) nach Anspruch 1, **dadurch gekennzeichnet, dass**
die Spannvorrichtung (100) ferner mindestens zwei Laufrollenmodule (60) umfasst, wobei jedes der mindestens zwei Laufrollenmodule (60) an der Montagebasis (10) befestigt ist und eine Gleithülse (512) einer der Spannbaugruppen (51) gleitbar an einem der Laufrollenmodule (60) vorgesehen ist.

10. Spannvorrichtung (100) nach Anspruch 9, **dadurch gekennzeichnet, dass**
das Laufrollenmodul (60) einen ersten Montagerahmen (61), einen zweiten Montagerahmen (62), eine erste Laufrolle (63), eine zweite Laufrolle (64), eine dritte Laufrolle (65) und eine vierte Laufrolle (66) umfasst, wobei der erste Montagerahmen (61) und der zweite Montagerahmen (62) relativ zur Montagebasis (10) fixiert sind, die erste Laufrolle (63) und die zweite Laufrolle (64) drehbar an dem ersten Montagerahmen (61) vorgesehen sind, die erste Laufrolle (63) und die zweite Laufrolle (64) beide an einer ersten Seitenfläche der Gleithülse (512) anliegen, die erste Laufrolle (63) und die zweite Laufrolle (64) senkrecht zueinander vorgesehen sind und die dritte Laufrolle (65) und die vierte Laufrolle (66) drehbar an dem zweiten Montagerahmen (62) vorgesehen sind; die dritte Laufrolle (65) und die vierte Laufrolle (66) jeweils an einer zweiten Seitenfläche der Gleithülse (512) anliegen und die dritte Laufrolle (65) und die vierte Laufrolle (66) senkrecht zueinander vorgesehen sind.

11. Computerimplementiertes Verfahren zum Bestimmen einer Kurve eines Hubkurvenvorsprungs (211) in der Spannvorrichtung (100) nach einem der Ansprüche 1 bis 10, **dadurch gekennzeichnet, dass** das Verfahren Folgendes umfasst:
Bestimmen eines ersten Abstands, der von dem Spannmodul (50) benötigt wird, wenn sich das erste Antriebsmodul (40) von einer zweiten Position in eine Endposition bewegt;
Erfassen einer Länge der Verbindungsstange (22);
Erfassen eines zweiten Abstands zwischen einem ersten Ende der Verbindungsstange (22) und einem Drehmittelpunkt der Drehplatte (21) und eines ersten eingeschlossenen Winkels zwischen einer ersten Verbindungslinie und einer zweiten Verbindungslinie, wenn sich das Spannmodul (50) an jeder Abtastposition befindet, wobei die erste Verbindungslinie eine Verbindungslinie zwischen dem zweiten Ende der Verbindungsstange (22) und dem Drehmittelpunkt der Drehplatte (21) ist und die zweite Linie eine Verbindungslinie zwischen dem ersten Ende der Verbindungsstange (22) und dem Drehmittelpunkt der Drehplatte (21) ist;
Berechnen eines Drehwinkels, der von der Drehplatte (21) benötigt wird, wenn sich das Spannmodul (50) an jeder Abtastposition befindet, anhand des ersten Abstands, der Länge der Verbindungsstange (22), des zweiten Abstands und des ersten eingeschlossenen Winkels; und
Bestimmen der Kurve des Hubkurvenvorsprungs (211) anhand des Drehwinkels, der zum Drehen der Platte erforderlich ist, wenn sich das Spannmodul (50) an jeder Abtastposition befindet.

12. Verfahren nach Anspruch 11, wobei der Schritt des Bestimmens der Kurve des Hubkurvenvorsprungs (211) anhand des Drehwinkels, der zum Drehen der Platte (21) erforderlich ist, wenn sich das Spannmodul (50) an jeder Abtastposition befindet, ferner Folgendes umfasst:
Abbilden jeder der Abtastpositionen auf die Drehplatte (21);
Berechnen eines erforderlichen Abstands zwischen dem Ratschenrad (31) und der Ratschenbaugruppe (32) anhand eines Drehwinkels, der zum Drehen der Platte (21) erforderlich ist, wenn sich das Spannmodul (50) an jeder Abtastposition befindet; und
Bestimmen des Hubkurvenvorsprungs (211) anhand des erforderlichen Abstands zwischen dem Ratschenrad (31) und der Ratschenbaugruppe (32), wenn sich das Spannmodul (50) an jeder Abtastposition befindet.

13. Rechenvorrichtung (200), **dadurch gekennzeichnet, dass** sie Folgendes umfasst:
eine Steuerung, die Folgendes umfasst: mindestens einen Prozessor (201) und einen Speicher (202), der kommunikativ mit dem mindestens einen Prozessor (201) verbunden ist;
wobei der Speicher (202) Anweisungen speichert, die von dem mindestens einen Prozessor (201) ausführbar sind, wobei die Anweisungen von dem mindestens einen Prozessor (201) ausgeführt werden, um es dem mindestens einen Prozessor (201) zu ermöglichen, das Verfahren nach einem der Ansprüche 11 und 12 durchzuführen.

14. Nichtflüchtiges computerlesbares Speichermedium, das computerausführbare Anweisungen speichert, um einen Server zu veranlassen, das Verfahren nach einem der Ansprüche 11 und 12 durchzuführen.

## Revendications

1. Dispositif de serrage (100) configuré pour serrer un pneu de véhicule, **caractérisé en ce qu'**il comprend :
une base de montage (10) ;
un module de serrage (50) comprenant au moins deux ensembles de serrage (51), dans lequel les au moins deux ensembles de serrage (51) sont tous deux disposés sur la base de montage (10), et les au moins deux ensembles de serrage (51) sont mobiles par rapport à la base de montage (10) ;
un module rotatif (20) comprenant une plaque rotative (21) et au moins deux tiges de liaison (22), dans lequel la plaque rotative (21) est disposée de manière rotative sur la base de montage (10), des premières extrémités des au moins deux tiges de liaison (22) sont toutes deux reliées de manière rotative à la plaque rotative (21), une seconde extrémité de l'une des tiges de liaison (22) est reliée de manière rotative à l'un des ensembles de serrage (51), et la plaque rotative (21) est pourvue d'une saillie de courbe de course (211) ;
un premier module d'entraînement (40) disposé sur la base de montage (10) ;
un module d'engagement (30) comprenant une roue à rochet (31) et un ensemble à rochet (32), dans lequel la roue à rochet (31) est fixée à la plaque rotative (21), l'ensemble à rochet (32) peut tourner par rapport à la plaque rotative (21), le premier module d'entraînement (40) est relié à l'ensemble à rochet (32), et lorsque le premier module d'entraînement (40) est entraîné, le premier module d'entraînement (40) entraîne l'ensemble à rochet (32) à se déplacer par rapport au module rotatif (20), dans lequel lorsque le premier module d'entraînement (40) est situé à une première position, la roue à rochet (31) et l'ensemble à rochet (32) sont séparés, lorsque le premier module d'entraînement (40) est situé à une deuxième position, la roue à rochet (31) et l'ensemble à rochet (32) sont engagés, et lorsque le premier module d'entraînement (40) est situé à une position finale, le premier module d'entraînement (40) est verrouillé, et lorsque le premier module d'entraînement (40) se déplace d'une deuxième position à une position finale, l'ensemble à rochet (32) entraîne la roue à rochet (31) à tourner, entraînant ainsi le module rotatif (20) à tourner ;
lorsque la plaque rotative (21) tourne, la saillie de courbe de course (211) étant utilisée pour ajuster la distance entre la roue à rochet (31) et l'ensemble à rochet (32), de sorte que lorsque le module de serrage (50) est à différentes positions, la deuxième position est différente, de sorte que lorsque le premier module d'entraînement (40) se déplace de la deuxième position à la position finale, la plaque rotative (21) tourne selon différents angles, et la distance de déplacement du module de serrage (50) à différentes positions par rapport à la base de montage (10) reste la même.

2. Dispositif de serrage (100) selon la revendication 1, **caractérisé en ce que**
l'ensemble à rochet (32) comprend une partie rotative (321), un cliquet (322), un premier élément élastique (323), un premier connecteur (324), une butée de rochet (325) et un élément de limitation (326), la partie rotative (321) est disposée coaxialement avec le module rotatif (20), et la partie rotative (321) peut tourner par rapport au module rotatif (20), une première extrémité du cliquet (322) est reliée à la partie rotative (321), une première extrémité du premier élément élastique (323) est reliée à la base de montage (10), une seconde extrémité du premier élément élastique (323) est reliée à la première extrémité du cliquet (322), la seconde extrémité du cliquet (322) est pourvue d'un rochet (3221), et la première extrémité du premier connecteur (324) est reliée de manière rotative à la partie rotative (321) ;
la seconde extrémité du premier connecteur (324) est reliée de manière rotative à la première extrémité de la butée de rochet (325), la première extrémité de la butée de rochet (325) est pourvue d'une première saillie (3251), la première saillie (3251) vient en butée contre la seconde extrémité du cliquet (322), la première extrémité de la butée de rochet (325) vient en butée contre la saillie de courbe de course (211), l'élément de limitation (326) est fixé à la base de montage (10), et la seconde extrémité de la butée de rochet (325) vient en butée contre l'élément de limitation (326) ;
lorsque le premier module d'entraînement (40) entraîne la partie rotative (321) à tourner, la partie rotative (321) tourne par rapport à la roue à rochet (31), sous l'action du premier élément élastique (323), le rochet de la seconde extrémité du cliquet (322) se rapproche de la roue à rochet (31), la butée de rochet (325) vient toujours en butée contre la saillie de courbe de course (211) sous l'action du premier connecteur (324) et de l'élément de limitation (326), la butée de rochet (325) tourne par rapport au premier connecteur (324), la première saillie (3251) de la première extrémité de la butée de rochet (325) se rapproche de la roue à rochet (31), jusqu'à ce que le rochet engage la roue à rochet (31) lorsque le premier module d'entraînement (40) est à la deuxième position, le premier module d'entraînement (40) continue d'entraîner la partie rotative (321) à se déplacer, et le cliquet (322) déplace la roue à rochet (31) de sorte que la plaque rotative (21) déplace l'ensemble de serrage (51) via la tige de liaison (22).

3. Dispositif de serrage (100) selon la revendication 1, **caractérisé en ce que**
le premier module d'entraînement (40) comprend une poignée (41), un deuxième connecteur (42), un troisième connecteur (43) et un quatrième connecteur (44) ;
une première extrémité de la poignée (41) est disposée de manière rotative sur la base de montage (10), une deuxième saillie (411) s'étend depuis la première extrémité de la poignée (41), une première extrémité du deuxième connecteur (42) est reliée de manière rotative à la deuxième saillie (411), une première extrémité du troisième connecteur (43) est reliée de manière rotative à la base de montage (10), une seconde extrémité du troisième connecteur (43), une seconde extrémité du deuxième connecteur (42) et une première extrémité du quatrième connecteur (44) sont reliées de manière rotative, et une seconde extrémité du quatrième connecteur (44) est reliée de manière rotative à la partie rotative (321) ;
lorsque la poignée (41) tourne d'une position de départ (41a) à une position finale (41b) et entraîne le deuxième connecteur (42), le troisième connecteur (43) et le quatrième connecteur (44) à se déplacer via la deuxième saillie (411) pour pousser la partie rotative (321) à tourner ; lorsque le troisième connecteur (43) et le quatrième connecteur (44) sont sur la même ligne droite, le premier module d'entraînement (40) est dans un état auto-verrouillé pour verrouiller la partie rotative (321) ; et lorsque la poignée (41) tourne de la position finale (41b) à la position de départ (41a), la poignée (41) entraîne le deuxième connecteur (42), le troisième connecteur (43) et le quatrième connecteur (44) à se déplacer via la deuxième saillie (411), le troisième connecteur (43) et le quatrième connecteur (44) ne sont pas sur la même ligne droite, le premier module d'entraînement (40) est dans un état déverrouillé, et la partie rotative (321) est mobile par rapport à la base de montage (10).

4. Dispositif de serrage (100) selon la revendication 3, **caractérisé en ce que**
le quatrième connecteur (44) comprend un cylindre extérieur de compression (441), une tige de compression (442) et un deuxième élément élastique (443), une première extrémité de la tige de compression (442) est reliée de manière rotative à une seconde extrémité du troisième connecteur (43) et à une seconde extrémité du deuxième connecteur (42), une seconde extrémité de la tige de compression (442) est emmanchée avec le cylindre extérieur de compression (441), le cylindre extérieur de compression (441) est relié de manière rotative à la partie rotative (321), le deuxième élément élastique (443) est disposé à l'intérieur du cylindre extérieur de compression (441), deux extrémités du deuxième élément élastique (443) viennent respectivement en butée contre la tige de compression (442) et le cylindre extérieur de compression (441), la tige de compression (442) est mobile de manière télescopique à l'intérieur du cylindre extérieur de compression (441), et le deuxième élément élastique (443) sert à amortir le mouvement entre la tige de compression (442) et le cylindre extérieur de compression (441).

5. Dispositif de serrage (100) selon la revendication 1, **caractérisé en ce que**
l'ensemble de serrage (51) comprend une mâchoire (511), un manchon coulissant (512), une tige de manchon (513) et un premier module de verrouillage (514) ;
le manchon coulissant (512) est disposé sur la base de montage (10), le manchon coulissant (512) est mobile par rapport à la base de montage (10), une première extrémité du manchon coulissant (512) de l'un des ensembles de serrage (51) est reliée de manière rotative à une seconde extrémité de l'une des tiges de liaison (22), le manchon coulissant (512) est pourvu d'une rainure télescopique (5121), et la rainure télescopique (5121) s'étend depuis la seconde extrémité du manchon coulissant (512) jusqu'à la première extrémité du manchon coulissant (512) ;
la mâchoire (511) est fixée à une première extrémité de la tige de manchon (513), une seconde extrémité de la tige de manchon (513) est insérée dans une rainure télescopique (5121) du manchon coulissant (512) depuis une seconde extrémité du manchon coulissant (512), et la tige de manchon (513) est mobile le long de la rainure télescopique (5121) de sorte que la première extrémité de la tige de manchon (513) se déplace dans une direction s'éloignant du manchon coulissant (512) ou se déplace dans une direction se rapprochant du manchon coulissant (512) ;
le premier module de verrouillage (514) est disposé sur le manchon coulissant (512) et la tige de manchon (513), et lorsque le premier module de verrouillage (514) est dans un état verrouillé, le manchon coulissant (512) et la tige de manchon (513) sont fixes, et lorsque le premier module de verrouillage (514) est dans un état déverrouillé, la tige de manchon (513) est autorisée à coulisser par rapport au manchon coulissant (512).

6. Dispositif de serrage selon la revendication 5, **caractérisé en ce que**
le premier module de verrouillage (514) comprend une base de verrouillage (5141), un troisième élément élastique (5142), un quatrième élément élastique (5143), un pointeau (5144) et un bouton (5146) ;
le manchon coulissant (512) est pourvu d'un premier trou traversant (5122) en communication avec la rainure télescopique (5121), la base de verrouillage (5141) est fixée au manchon coulissant (512) et pourvue d'un deuxième trou traversant (51411), le deuxième trou traversant (51411) est en communication avec le premier trou traversant (5122), le bouton (5146) comprend une partie de pression (51462) et une partie d'extension (51461) s'étendant depuis la partie de pression (51462), la partie d'extension (51461) est insérée dans le deuxième trou traversant (51411), et la partie d'extension (51461) est mobile le long du deuxième trou traversant (51411) et est insérée dans le premier trou traversant (5122) depuis le deuxième trou traversant (51411) ou rétractée dans le deuxième trou traversant (51411) depuis le premier trou traversant (5122), et le troisième élément élastique (5142) est situé dans le deuxième trou traversant (51411) ; une première extrémité du troisième élément élastique (5142) vient en butée contre la partie de pression (51462), et une seconde extrémité du troisième élément élastique (5142) vient en butée contre le manchon coulissant (512) ;
la tige de manchon (513) est pourvue d'une rainure de montage (5131), le quatrième élément élastique (5143) et le pointeau (5144) sont disposés dans la rainure de montage (5131), une première extrémité du quatrième élément élastique (5143) est fixée à un fond de rainure de la rainure de montage (5131), et une seconde extrémité du quatrième élément élastique (5143) est fixée à une première extrémité du pointeau (5144) ;
lorsque la tige de manchon (513) coulisse jusqu'à une position où le premier trou traversant (5122) correspond à la rainure de montage (5131), sous l'action du quatrième élément élastique (5143), la seconde extrémité du pointeau (5144) fait saillie depuis l'encoche de la rainure de montage (5131) et est insérée dans le premier trou traversant (5122), et le premier module de verrouillage (514) est dans un état verrouillé ; et lorsque la partie de pression (51462) est forcée vers la tige de manchon (513), la partie d'extension (51461) est insérée dans le premier trou traversant (5122) depuis le deuxième trou traversant (51411), et la seconde extrémité du pointeau (5144) est poussée hors du premier trou traversant (5122), le premier module de verrouillage (514) est dans un état déverrouillé.

7. Dispositif de serrage (100) selon la revendication 6, **caractérisé en ce que**
une première barrière (51464) s'étend depuis une paroi latérale de la partie de pression (51462) ;
la base de verrouillage (5141) est pourvue d'une deuxième barrière (51412) située à une extrémité du deuxième trou traversant (51411) éloignée du premier trou traversant (5122), et la deuxième barrière (51412) est utilisée pour bloquer la première barrière (51464).

8. Dispositif de serrage (100) selon la revendication 6, caractérisé en ce quele troisième élément élastique (5142) est un ressort et est emmanché sur la partie d'extension (51461), et/ou la seconde extrémité du pointeau (5144) est pourvue d'une transition (51441).

9. Dispositif de serrage (100) selon la revendication 1, **caractérisé en ce que**
le dispositif de serrage (100) comprend en outre au moins deux modules de galets (60), chacun des au moins deux modules de galets (60) étant fixé à la base de montage (10), un manchon coulissant (512) de l'un des ensembles de serrage (51) étant disposé de manière coulissante sur l'un des modules de galets (60).

10. Dispositif de serrage (100) selon la revendication 9, **caractérisé en ce que**
le module de galets (60) comprend un premier cadre de montage (61), un deuxième cadre de montage (62), un premier galet (63), un deuxième galet (64), un troisième galet (65) et un quatrième galet (66), dans lequel le premier cadre de montage (61) et le deuxième cadre de montage (62) sont relativement fixés à la base de montage (10), le premier galet (63) et le deuxième galet (64) sont disposés de manière rotative sur le premier cadre de montage (61), le premier galet (63) et le deuxième galet (64) viennent tous deux en butée contre une première surface latérale du manchon coulissant (512), le premier galet (63) et le deuxième galet (64) sont disposés perpendiculairement l'un à l'autre, et le troisième galet (65) et le quatrième galet (66) sont disposés de manière rotative sur le deuxième cadre de montage (62) ; le troisième galet (65) et le quatrième galet (66) viennent chacun en butée contre une seconde surface latérale du manchon coulissant (512), et le troisième galet (65) et le quatrième galet (66) sont disposés perpendiculairement l'un à l'autre.

11. Procédé mis en œuvre par ordinateur pour déterminer une courbe d'une saillie de courbe de course (211) dans le dispositif de serrage (100) selon l'une quelconque des revendications 1 à 10, **caractérisé en ce que** le procédé comprend :
la détermination d'une première distance requise par le module de serrage (50) lorsque le premier module d'entraînement (40) se déplace d'une deuxième position à une position finale ;
l'acquisition d'une longueur de la tige de liaison (22) ;
l'acquisition d'une deuxième distance entre une première extrémité de la tige de liaison (22) et un point central de rotation de la plaque rotative (21) et d'un premier angle inclus entre une première ligne de liaison et une deuxième ligne de liaison lorsque le module de serrage (50) est à chaque position d'échantillonnage, dans lequel la première ligne de liaison est une ligne de liaison entre la seconde extrémité de la tige de liaison (22) et le point central de rotation de la plaque rotative (21), et la seconde ligne est une ligne de liaison entre la première extrémité de la tige de liaison (22) et le point central de rotation de la plaque rotative (21) ;
le calcul d'un angle de rotation requis par la plaque rotative (21) lorsque le module de serrage (50) est à chaque position d'échantillonnage en fonction de la première distance, de la longueur de la tige de liaison (22), de la deuxième distance et du premier angle inclus ; et
la détermination de la courbe de la saillie de courbe de course (211) en fonction de l'angle de rotation requis pour faire tourner la plaque lorsque le module de serrage (50) est à chaque position d'échantillonnage.

12. Procédé selon la revendication 11, l'étape de détermination de la courbe de la saillie de courbe de course (211) en fonction de l'angle de rotation requis pour faire tourner la plaque (21) lorsque le module de serrage (50) est à chaque position d'échantillonnage comprenant en outre :
le mappage de chacune des positions d'échantillonnage sur la plaque rotative (21) ;
le calcul d'une distance requise entre la roue à rochet (31) et l'ensemble à rochet (32) en fonction d'un angle de rotation requis pour faire tourner la plaque (21) lorsque le module de serrage (50) est à chaque position d'échantillonnage ; et
la détermination de la saillie de courbe de course (211) en fonction de la distance requise entre la roue à rochet (31) et l'ensemble à rochet (32) lorsque le module de serrage (50) est à chaque position d'échantillonnage.

13. Appareil informatique (200), **caractérisé en ce qu'**il comprend :
un contrôleur comprenant : au moins un processeur (201) et une mémoire (202) reliée de manière communicative à l'au moins un processeur (201) ;
dans lequel la mémoire (202) stocke des instructions exécutables par l'au moins un processeur (201), les instructions étant exécutées par l'au moins un processeur (201) pour permettre à l'au moins un processeur (201) de réaliser le procédé selon l'une quelconque des revendications 11 et 12.

14. Support de stockage non transitoire lisible par ordinateur stockant des instructions exécutables par ordinateur pour amener un serveur à réaliser le procédé selon l'une quelconque des revendications 11 et 12.
